# EUROPEAN PATENT APPLICATION

(11) **EP 4 383 542 A1**
(43) Date of publication of application: **12.06.2024**
(21) Application number: 21954634.8
(22) Date of filing: 27.08.2021
(51) Int. Cl.: H02M 3/07, H02M 7/48, H02M 7/487, H02M 7/493

(54) **INVERTING CONVERSION CIRCUIT AND PHOTOVOLTAIC POWER GENERATION SYSTEM**

(71) Applicant: Huawei Digital Power Technologies Co., Ltd., Shenzhen, Guangdong 518043 (CN)
(72) Inventor: BIAN, Qing, Shenzhen, Guangdong 518129 (CN); CHEN, Wenbin, Shenzhen, Guangdong 518129 (CN)
(74) Representative: Gill Jennings & Every LLP
(86) International application number: PCT/CN2021/115149
(87) International publication number: WO 2023/024111

(57) **Abstract**

This application discloses a flipped conversion circuit and a photovoltaic power generation system. The flipped conversion circuit includes a plurality of connection ends, a halfbridge switch unit, an output capacitor unit, a resonant unit, a series diode unit, an energy storage switch unit, an input unit, an output unit, and a controller. The energy storage switch unit includes at least one switch device and a first diode, and the at least one switch device is connected to the first diode in series. The controller is configured to convert, by controlling the switch device in the half-bridge switch unit and the switch device in the energy storage switch unit to be turned on or turned off, a first voltage that is input by the input unit into a second voltage, so that the output unit outputs the second voltage. Compared with an existing topology structure, based on a structure of the flipped conversion circuit provided in this application, a quantity of diodes in the circuit and board space occupied by the circuit can be reduced, so that losses and costs of the entire circuit are reduced, and power density is significantly increased.

## Description

### TECHNICAL FIELD

This application relates to the field of power electronics, and in particular, to a flipped conversion circuit and a photovoltaic power generation system.

### BACKGROUND

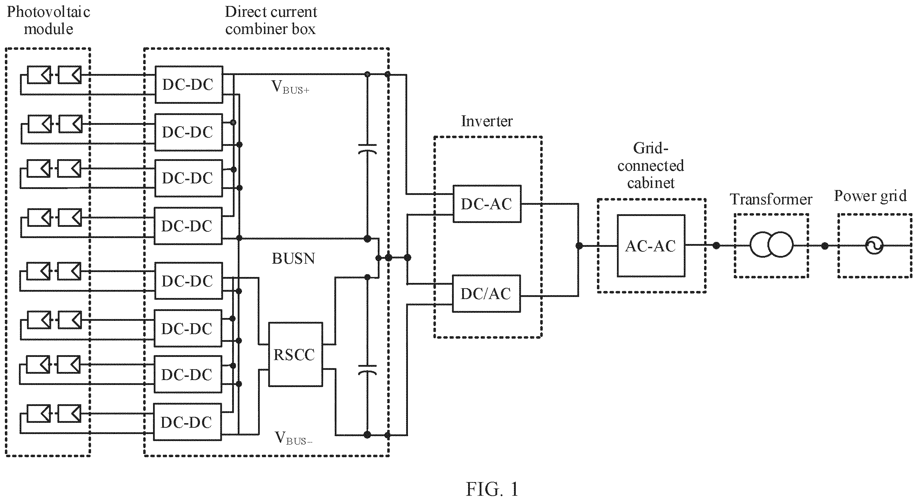

In a common high-voltage direct current (high-voltage direct current, HVDC) system, uninterruptible power supply (uninterruptible power supply, UPS) system, and photovoltaic power generation system, a direct current converter is used in a conversion circuit to convert electric energy of a direct current. FIG. 1 shows a typical photovoltaic power generation system. In the photovoltaic power generation system, a current bearing capability and a cable loss of a downstream cable that is caused by an excessively high current mainly need to be considered for a direct current combiner box. Therefore, on a premise of ensuring an output power, the direct current combiner box needs to reduce an output current. Specifically, the direct current combiner box includes a direct current-to-direct current converter (direct current-to-direct current converter, DC-DC) circuit and a resonant switched capacitor converter (resonant switched capacitor converter, RSCC) circuit. Four photovoltaic modules in an upper half area of FIG. 1 are respectively connected to corresponding DC-DC circuits in the direct current combiner box. The DC-DC circuits are connected in parallel, output V_{BUS+}, and input V_{BUS+} to a direct current bus. Four photovoltaic modules in a lower half area of FIG. 1 are also connected to DC-DC circuits. The DC-DC circuits are connected in parallel, perform outputting, and are connected to resonant switched capacitor converter RSCC circuits. The RSCC circuits are connected in parallel and output V_{BUS-} to a direct current bus. At a BUSN point, after V_{BUS+} and V_{BUS-} are connected in series, a total voltage that is twice a voltage V_{BUS} can be output to a downstream inverter, to finally supply power to a relatively critical alternating current load (for example, a power grid) by using a grid-connected cabinet and a transformer. In the foregoing manner, on a premise of outputting a same power, the direct current combiner box increases a voltage on the direct current bus, thereby reducing an output current.

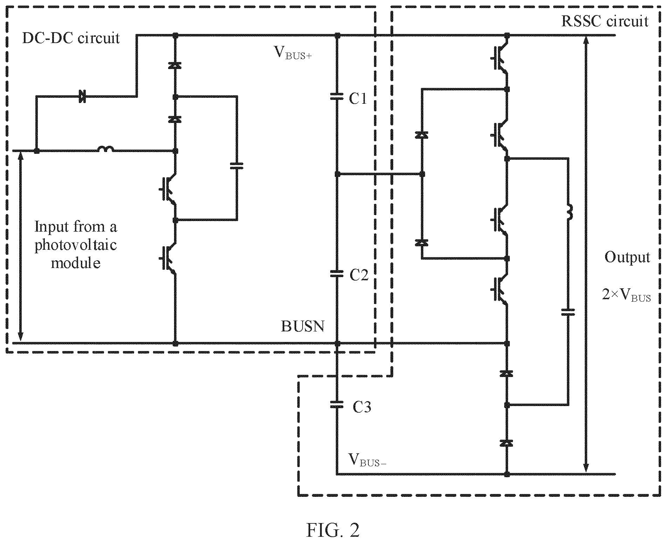

FIG. 2 is a schematic diagram of a topology structure of a current DC-DC circuit and a current RSCC circuit. As shown in FIG. 2, the DC-DC circuit is configured to: connect to a photovoltaic module, receive a direct current voltage Vin that is input by the photovoltaic module, and boost the direct current voltage Vin that is input by the photovoltaic module, to obtain V_{BUS+}. V_{BUS+} falls on C1 and C2 that are connected in series. The RSCC circuit is configured to: partially connect to the DC-DC circuit, and flip V_{BUS+} by using V_{BUS+} that is output by the DC-DC circuit, to obtain V_{BUS-}. V_{BUS-} falls on a capacitor C3. A total output voltage of the circuit is twice V_{BUS}. However, in the foregoing solution, excessive semiconductor devices are used, causing an increase in manufacturing costs of the circuit. Correspondingly, because of an excessively large quantity of semiconductors, losses caused by the semiconductors in the circuit are further relatively high. Finally, both conversion efficiency of the direct current combiner box and even conversion efficiency of the entire inverter system are relatively low. In view of this, how to effectively reduce a quantity of semiconductor devices in the direct current combiner box is an urgent solution to be resolved by a person skilled in the art.

### SUMMARY

This application provides a flipped conversion circuit and a photovoltaic power generation system. Compared with an existing topology structure of a DC-DC circuit and an RSCC circuit, a quantity of semiconductor devices can be significantly reduced, so that power supply costs are reduced, losses are reduced, and conversion efficiency is increased.

According to a first aspect, this application provides a flipped conversion circuit, where the flipped conversion circuit includes: a first connection end S1, a second connection end S2, a third connection end S3, a halfbridge switch unit, an output capacitor unit, a resonant unit, a series diode unit, an energy storage switch unit, an input unit, an output unit, and a controller. The half-bridge switch unit includes N switch devices, and N is an even number. The half-bridge switch unit is connected between S1 and S2, the series diode unit is connected between S2 and S3, the output capacitor unit is connected to two ends of the series diode unit in parallel, the input unit is connected between S1 and S2, and the output unit is connected between S1 and S3. The energy storage switch unit includes at least one switch device and a first diode D1, where the at least one switch device is connected to the first diode D1 in series. The resonant unit includes a first capacitor and a first inductor, where a first end of the first inductor is connected to the half-bridge switch unit, a second end of the first capacitor is connected to the series diode unit, and a second end of the first inductor is connected to a first end of the first capacitor. One end of the energy storage switch unit is connected between the half-bridge switch unit and the series diode unit, and the other end is connected to the second end of the first inductor. The controller is configured to convert, by controlling the switch device in the half-bridge switch unit and the switch device in the energy storage switch unit to be turned on or turned off, a first voltage that is input by the input unit into a second voltage, so that the output unit outputs the second voltage.

Based on the structure of the flipped conversion circuit provided in this embodiment of this application, costs of elements in the circuit, board space occupied by the entire circuit, and device losses can be obviously reduced. In addition, compared with the conventional technology, based on the structure provided in this application, a quantity of diodes is further significantly reduced, so that the switch device in the flipped conversion circuit has a zero-voltage turn-on condition, and switch losses are reduced.

A specific quantity of switch devices in the half-bridge switch unit and a specific quantity of switch devices in the energy storage switch unit may be related to a value of the first voltage and a withstand voltage capability of the switch device. During specific design of the quantity of switch devices in the half-bridge switch unit and the quantity of switch devices in the energy storage switch unit, if the first voltage is relatively high and the withstand voltage capability of the switch device is relatively low, a plurality of switch devices may be connected in series to perform voltage division on the first voltage, to ensure that the switch device with the low withstand voltage capability can normally work. In a possible implementation, the half-bridge switch unit includes a first switch module and a second switch module, where the first switch module and the second switch module each include one switch device. Optionally, a first electrode of the switch device in the first switch module is connected to S1, a second electrode of the switch device in the first switch module is connected to a first electrode of the switch device in the second switch module, and a second electrode of the switch device in the second switch module is connected to S2. One end of the first inductor is connected to the second electrode of the switch device in the first switch module.

In a possible implementation, the half-bridge switch unit includes a first switch module and a second switch module, where the first switch module and the second switch module each include a plurality of switch devices; and in the first switch module and the second switch module, every two adjacent switch devices are connected to each other in series and/or in parallel.

In a possible implementation, the series diode unit specifically includes a second diode D2 and a third diode D3, where a negative electrode of D2 is connected to S2, a positive electrode of D2 is connected to a negative electrode of D3, and a positive electrode of D3 is connected to S3; and the second end of the first inductor in the resonant unit is connected between D2 and D3. In addition, the series diode unit in this embodiment of this application may also be referred to as a clamping unit. The clamping unit may be configured to limit a voltage of the second access end S2 not to change.

The controller may set a ratio of the first voltage to the second voltage based on different scenarios. The flipped conversion circuit provided in this embodiment of this application may be applied to scenarios, such as boost conversion, buck conversion, and polarity conversion. In the boost conversion scenario, the second voltage may be greater than the first voltage. In the buck conversion scenario, the second voltage may be less than the first voltage. In the polarity conversion scenario, the second voltage and the first voltage may be opposite numbers of each other. In this embodiment of this application, a range of the second voltage may be determined based on a range of the first voltage provided by the input unit. Specifically, in a possible implementation, the controller is specifically configured to: when a ratio of the first voltage to the second voltage is set to a first target ratio, control the switch device in the second switch module to be turned off, so that the first capacitor and the first inductor that are in the resonant unit form resonance, and the resonant unit reversely charges an output capacitor in the output capacitor unit by using D3 in the series diode unit; when it is detected that a resonance current on the first inductor in the resonant unit is 0, control the switch device in the second switch module to be turned on; control the switch device in the first switch module to be turned off and the switch device in the energy storage switch unit to be turned off, where the first voltage charges the first inductor; control the switch device in the first switch module to be turned off, so that the first capacitor and the first inductor that are in the resonant unit form resonance; and when it is detected that the resonance current on the first inductor in the resonant unit is 0, control the switch device in the first switch module to be turned on.

In a possible implementation, when a ratio of the first voltage to the second voltage is set to a second target ratio, the controller controls the switch device in the second switch module to be turned on, so that the first capacitor and the first inductor that are in the resonant unit form resonance; when it is detected that a resonance current on the first inductor in the resonant unit is 0, controls the switch device in the second switch module to be turned off; controls the switch device in the first switch module to be turned on, so that the first capacitor and the first inductor that are in the resonant unit form resonance; and when it is detected that the resonance current on the first inductor in the resonant unit is 0, controls the switch device in the first switch module to be turned off.

There are a plurality of manners of connecting the half-bridge switch unit and a device externally connected to the half-bridge switch unit. In a possible implementation, the flipped conversion circuit further includes a second capacitor and a third capacitor, where one end of the second capacitor is connected to S1, the other end of the second capacitor is connected to one end of the third capacitor, and the other end of the third capacitor is connected to S2.

In a possible implementation, the first switch module includes a first switching transistor Q1, a second switching transistor Q2, and a fourth diode D4; and the second switch module includes a third switching transistor Q3, a fourth switching transistor Q4, and a fifth diode D5, where a first electrode of Q1 is connected to S1, a second electrode of Q1 is connected to a first electrode of Q2, the second electrode of Q1 is connected to the first end of the first capacitor, and a negative electrode of D4 is connected to the second electrode of Q1; a first electrode of Q3 is connected to the first end of the first capacitor, a second electrode of Q3 is connected to a first electrode of Q4, a second electrode of Q4 is connected to S2, a positive electrode of D5 is connected to the second electrode of Q3; and a positive electrode of D4 is connected to a negative electrode of D5.

In a possible implementation, the flipped conversion circuit further includes a fourth capacitor and a fifth capacitor, where one end of the fourth capacitor is connected to S1, the other end of the fourth capacitor is connected to one end of the fifth capacitor, the other end of the fifth capacitor is connected to S2, and the other end of the fourth capacitor is further connected to the positive electrode of D4.

In a possible implementation, the controller is further configured to: when the ratio of the first voltage to the second voltage is set to the first target ratio, control Q3 and Q4 that are in the second switch module to be turned on, so that the first capacitor and the first inductor that are in the resonant unit form resonance, and the resonant unit reversely charges the output capacitor in the output capacitor unit by using D3 in the series diode unit; when it is detected that the resonance current on the first inductor in the resonant unit is 0, control Q3 and Q4 that are in the second switch module to be turned off; control Q1 and Q2 that are in the first switch module to be turned on and the switch device in the energy storage switch unit to be turned on, where the first voltage charges the first inductor; control Q1 and Q2 that are in the first switch module to be turned on, so that the first capacitor and the first inductor that are in the resonant unit form resonance; and when it is detected that the resonance current on the first inductor in the resonant unit is 0, control Q1 and Q2 that are in the first switch module to be turned off; and control Q3 in the first switch module to be turned on, so that an inductance current on the first inductor in the resonant unit reversely charges the output capacitor in the output capacitor unit by using Q3, D5, and D3.

In a possible implementation, the controller is further configured to: when the ratio of the first voltage to the second voltage is set to the second target ratio, control Q3 in the second switch module to be turned on, so that an inductance current on the first inductor in the resonant unit reversely charges the output capacitor in the output capacitor unit by using Q3, D5, and D3; control Q3 and Q4 that are in the first switch module to be turned on, so that the first capacitor and the first inductor that are in the resonant unit form resonance; when it is detected that a resonance current on the first inductor in the resonant unit is 0, control Q3 and Q4 that are in the second switch module to be turned off; control Q2 in the second switch module to be turned on, so that the inductance current on the first inductor in the resonant unit reversely charges the output capacitor in the output capacitor unit by using Q2, D4, and D3; control Q1 and Q2 that are in the first switch module to be turned on, so that the first capacitor and the first inductor that are in the resonant unit form resonance; and when it is detected that the resonance current on the first inductor in the resonant unit is 0, control Q1 and Q2 that are in the first switch module to be turned off.

In a possible implementation, the controller is further configured to: when a ratio of the first voltage to the second voltage is set to a third target ratio, control Q3 in the second switch module to be turned on; when the resonance current on the first inductor in the resonant unit is controlled to be 0, control Q3 in the second switch module to be turned off; control Q1 and Q2 that are in the first switch module to be turned on and the switch device in the energy storage switch unit to be turned on, where the first voltage charges the first inductor; control Q1 and Q2 that are in the first switch module to be turned on and the switch device in the energy storage switch unit to be turned off, so that the first capacitor and the first inductor that are in the resonant unit form resonance; and control Q3 in the second switch module to be turned on.

In a possible implementation, the energy storage switch unit includes a sixth capacitor, where the sixth capacitor is connected to the first diode D1 in parallel, and the sixth capacitor is configured to eliminate a voltage peak of the at least one switch device in the energy storage switch unit.

In a possible implementation, the input unit specifically includes an input direct current source and a direct current voltage boost circuit, where the direct current voltage boost circuit is configured to perform voltage boosting on the first voltage of the input direct current source.

According to a second aspect, this application provides a photovoltaic power generation system, including the flipped conversion circuit provided in the first aspect, a plurality of photovoltaic strings, and an inverter circuit, where the plurality of photovoltaic strings are connected to an input unit in the flipped conversion circuit; an output unit of the flipped conversion circuit is connected to the inverter circuit; the flipped conversion circuit is configured to convert, into second voltages, first voltages that are output by the plurality of photovoltaic strings, so that the output unit outputs the second voltage; and an output terminal of the inverter circuit is connected to a power grid, to convert the second voltage into an alternating current voltage and provide the alternating current voltage to the power grid.

It is clearer and easier to understand the aspects or other aspects of this application in descriptions of the following embodiments.

### BRIEF DESCRIPTION OF DRAWINGS

FIG. 1 is a schematic diagram of a structure of an existing photovoltaic power generation system;
FIG. 2 is a schematic diagram of a topology structure of a current DC-DC circuit and a current RSCC circuit;
FIG. 3 is a schematic diagram of a structure of a flipped conversion circuit;
FIG. 4 is a schematic diagram of a structure of a half-bridge switch unit;
FIG. 5 is a schematic diagram of a specific structure of a half-bridge switch unit;
FIG. 6 is a schematic diagram of a structure of a series diode unit;
FIG. 7A to FIG. 7C are schematic diagrams 1 of turn-on and turn-off of a flipped conversion circuit;
FIG. 7D is a sequence diagram 1 of a flipped conversion circuit;
FIG. 8A and FIG. 8B are schematic diagrams 2 of turn-on and turn-off of a flipped conversion circuit;
FIG. 8C is a sequence diagram 2 of a flipped conversion circuit;
FIG. 9 is a schematic diagram of a structure 1 corresponding to a flipped conversion circuit;
FIG. 10 is a schematic diagram of a structure 2 corresponding to a flipped conversion circuit;
FIG. 11 is a schematic diagram of a structure 3 corresponding to a flipped conversion circuit;
FIG. 12A is a schematic diagram of a structure 4 corresponding to a flipped conversion circuit;
FIG. 12B is a schematic diagram of a structure 5 corresponding to a flipped conversion circuit;
FIG. 13A is a schematic diagram of a structure 6 corresponding to a flipped conversion circuit;
FIG. 13B is a schematic diagram of a structure 7 corresponding to a flipped conversion circuit;
FIG. 14A is a schematic diagram of a structure 8 corresponding to a flipped conversion circuit;
FIG. 14B is a schematic diagram of a structure 9 corresponding to a flipped conversion circuit;
FIG. 15A is a schematic diagram of a structure 10 corresponding to a flipped conversion circuit;
FIG. 15B is a schematic diagram of a structure 11 corresponding to a flipped conversion circuit;
FIG. 16A is a schematic diagram of a structure 12 corresponding to a flipped conversion circuit;
FIG. 16B is a schematic diagram of a structure 13 corresponding to a flipped conversion circuit;
FIG. 17A to FIG. 17D are schematic diagrams 3 of turn-on and turn-off of a flipped conversion circuit;
FIG. 17E is a sequence diagram 3 of a flipped conversion circuit;
FIG. 18A to FIG. 18D are schematic diagrams 4 of turn-on and turn-off of a flipped conversion circuit;
FIG. 18E is a sequence diagram 4 of a flipped conversion circuit;
FIG. 19A to FIG. 19D are schematic diagrams 5 of turn-on and turn-off of a flipped conversion circuit;
FIG. 19E is a sequence diagram 5 of a flipped conversion circuit; and
FIG. 20 is a schematic diagram of a structure of a photovoltaic power generation system.

### DESCRIPTION OF EMBODIMENTS

In a common high-voltage direct current system, uninterruptible power supply system, and photovoltaic power generation system, a direct current converter is used to convert electric energy of a direct current. FIG. 1 shows a typical photovoltaic power generation system. In the photovoltaic power generation system, a current bearing capability and a cable loss of a downstream cable need to be considered for a direct current combiner box. Therefore, on a premise of ensuring an output power, the direct current combiner box reduces an output current, so that the cable loss can be reduced.

Currently, the direct current combiner box mainly includes a DC-DC circuit and an RSCC circuit. FIG. 1 is used as an example. Four photovoltaic modules in an upper half area of FIG. 1 are respectively connected to DC-DC circuits in the direct current combiner box. The DC-DC circuits are connected in parallel, output V_{BUS+}, and input V_{BUS+} to a direct current bus. Four photovoltaic modules in a lower half area of FIG. 1 are also connected to DC-DC circuits. Then the DC-DC circuits are connected in parallel, perform outputting, and are then connected to resonant switched capacitor converter RSCC circuits. The RSCC circuits output V_{BUS-} to a direct current bus. At a BUSN point (that is, a zero voltage potential point), after V_{BUS+} and V_{BUS-} are connected in series, a total voltage that is twice a voltage V_{BUS} can be output to a downstream inverter. Based on the conventional technology, in the foregoing manner, on a premise of outputting a same power, the direct current combiner box increases a voltage on the direct current bus, thereby reducing an output current.

In a topology structure including the DC-DC circuit and the RSCC circuit, excessive semiconductor devices are used, causing an increase in manufacturing costs of the entire direct current combiner box. Correspondingly, because of an excessively large quantity of semiconductors, losses of the entire direct current combiner box are further relatively high. Finally, both conversion efficiency of the direct current combiner box and even conversion efficiency of the entire photovoltaic power generation system are relatively low.

In view of this, this application provides a flipped conversion circuit. Compared with the topology structure including the DC-DC circuit and the RSCC circuit in the conventional technology, a quantity of semiconductor devices in a direct current combiner box may be obviously reduced, and conversion efficiency is increased on a premise that costs are reduced.

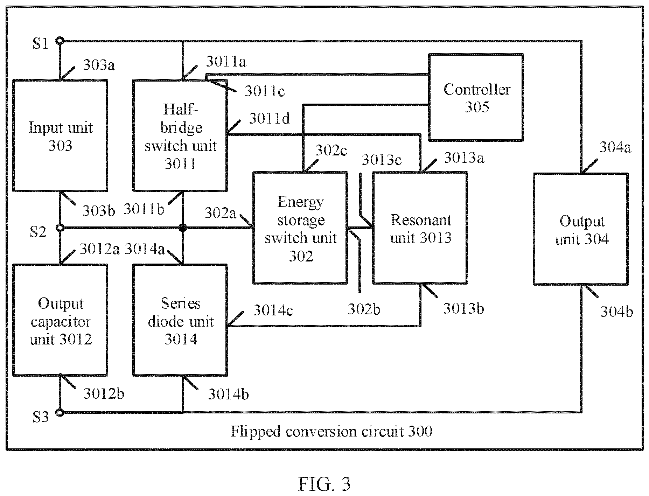

As shown in FIG. 3, the flipped conversion circuit 300 provided in an embodiment of this application may include a first connection end S1, a second connection end S2, a third connection end S3, a half-bridge switch unit 3011, an output capacitor unit 3012, a resonant unit 3013, a series diode unit 3014, an energy storage switch unit 302, an input unit 303, an output unit 304, and a controller 305. The half-bridge switch unit 3011 includes N switch devices, and N is an even number.

The controller 305 may be connected to the half-bridge switch unit 3011 and the energy storage switch unit 302, to control the switch device in the switch unit 3011 and a switch device in the energy storage switch unit 302.

In this embodiment of this application, a positive input end 303a of the input unit 303 is connected to the first connection end S1, and a negative input end 303b of the output unit 303 is connected to the second connection end S2.

A first end 3012a of the output capacitor unit 3012 is connected to the first end S2, and a second end 3012b of the output capacitor unit 3012 is connected to the third connection end S3. A first end 3011a of the half-bridge switch unit 3011 is connected to the first connection end S1, a second end 3011b of the half-bridge switch unit 3011 is connected to the second connection end S2, a third end 3011c of the half-bridge switch unit 3011 is connected to the controller 305, and a fourth end 3011d of the half-bridge switch unit 3011 is connected to a first end 3013a of the resonant unit 3013. A first end 3014a of the series diode unit 3014 is connected to the second connection end S2, a second end 3014b of the series diode unit 3014 is connected to the third connection end S3, and a third end 3014c of the series diode unit 3014 is connected to a second end 3013b of the resonant unit 3013.

A first end 302a of the energy storage switch unit 302 is connected between the second end 3011b of the half-bridge switch unit 3011 and the first end 3014a of the series diode unit 3014, a second end 302b of the energy storage switch unit 302 is connected to a third end 3013c of the resonant unit, and a third end 302c of the energy storage switch unit 302 is connected to the controller 305.

A positive output end 303a of the output unit 304 is connected to the first connection end S1, and a negative output end 303b of the output unit 304 is connected to the third connection end S3.

Specifically, in this embodiment of this application, the input unit 303 may further include at least one capacitor, to regulate a first voltage and store electric energy.

In this embodiment of this application, a resonant inductor and a resonant capacitor that are in the resonant unit 3013 may be connected in series. The resonant unit 3013 may include a first capacitor and a first inductor that are connected in series, a first end of the first inductor is connected to the half-bridge switch unit 3011, and a second end of the first capacitor is connected to the series diode unit 3014. A second end of the first inductor is connected to the first end of the first capacitor.

The first inductor and the first capacitor that are in the resonant unit 3013 provided in this embodiment of this application are configured to: transfer energy, and enable the switch device in the half-bridge switch unit 3011 and the switch device in the energy storage switch unit 302 to work in a soft switching state. Alternatively, the resonant unit 3013 may be used as an energy transfer unit (an energy relay component or an energy relay module). In other words, the resonant unit 3013 may be used as an energy transfer medium, be first charged by the first voltage of the input unit 303, and after being charged, provide electric energy to the output capacitor unit 3012, to charge the output capacitor unit 3012. Finally, the output unit 304 receives electric energy that is jointly output by the input unit 303 and the output capacitor unit 3012, to convert, into a higher voltage for outputting, the first voltage that is input.

In this embodiment of this application, the switch device in the half-bridge switch unit 3011 and the switch device in the energy storage switch unit 302 may be one or more of a plurality of types of switch devices, such as a metal-oxide semiconductor field-effect transistor (metal-oxide semiconductor field effect transistor, MOSFET), a bipolar junction transistor (bipolar junction transistor, BJT), an insulated gate bipolar transistor (insulated gate bipolar transistor, IGBT), a field effect transistor (field effect transistor, FET), a silicon carbide (SiC) power transistor, or a gallium nitride (GaN) power transistor. The switch devices are not listed one by one in this embodiment of this application. Each switch device may include a first electrode, a second electrode, and a control electrode. The control electrode is configured to control turn-on or turn-off of a switch. When the switch is turned on, a current may be transmitted between the first electrode and the second electrode of the switch. When the switch is turned off, no current can be transmitted between the first electrode and the second electrode of the switch. The MOSFET is used as an example. A control electrode of a switch is a gate. A first electrode of the switch may be a source of the switch device, and a second electrode may be a drain of the switch device. Alternatively, a first electrode may be a drain of the switch, and a second electrode may be a source of the switch. Each of a first end of a primary power transistor and a first end of an auxiliary power transistor may be a source (source), or may be a drain (drain). When the first end is a source, a second end is a drain. However, when the first end is a drain, the second end is a source.

A specific quantity of switch devices in the half-bridge switch unit 3011 and a specific quantity of switch devices in the energy storage switch unit 302 may be related to a value of the first voltage and a withstand voltage capability of the switch device. During specific design of the quantity of switch devices in the half-bridge switch unit 3011 and the quantity of switch devices in the energy storage switch unit 302, if the first voltage is relatively high and the withstand voltage capability of the switch device is relatively low, a plurality of switch devices may be connected in series to perform voltage division on the first voltage, to ensure that the switch device with the low withstand voltage capability can normally work.

The output capacitor unit 3012 provided in this embodiment of this application is connected in parallel to two ends of the series diode unit 3014. The series diode unit 3014 includes a plurality of diodes connected in series, a positive electrode of each of the plurality of diodes connected in series is connected to a negative electrode of an adjacent diode, a first diode is connected to S2, and a last diode is connected to S3. The output capacitor unit 3012 may include at least one capacitor. It should be understood that the series diode unit 3014 may further include another element, to implement an action or a function of the series diode unit 3014 in this embodiment of this application. This is not excessively limited in this embodiment of the present invention.

The controller 305 provided in this embodiment of this application is configured to: control the switch device in the half-bridge switch unit 3011 and the switch device in the energy storage switch unit 302 to be turned off, and convert the first voltage that is input by the input unit 303 into a second voltage, so that the output unit 304 outputs the second voltage.

Optionally, the controller 305 in this embodiment of this application may be a general-purpose central processing unit (central processing unit, CPU), a general-purpose processor, a digital signal processor (digital signal processing, DSP), an application-specific integrated circuit (application-specific integrated circuits, ASIC), a field programmable gate array (field programmable gate array, FPGA) or another programmable logic device, a transistor logic device, a hardware component, or any combination thereof. The controller 305 may implement or execute various example logical blocks, modules, and circuits described with reference to content disclosed in this application. The processor may also be a combination implementing a computing function, for example, a combination including one or more microprocessors, or a combination of a DSP and a microprocessor.

For example, when controlling the half-bridge switch unit 3011 to transmit, to the output filter unit 3014, the first voltage provided by the input unit 303, the controller 305 controls the half-bridge switch unit 3011 to transmit, to the resonant unit 3013, the electric energy provided by the input unit 303, so that the input unit 303 can charge the resonant unit 3013. Then, voltage conversion is performed, by using the energy storage switch unit 302, on the first voltage provided by the input unit 303. The half-bridge switch unit 3011 is controlled to transmit the electric energy in the resonant unit 3013 to the output capacitor unit 3012. Finally, the resonant unit 3013 charges the output capacitor unit 3012, and the output unit 304 outputs the second voltage.

The controller 305 provided in this embodiment of this application may control the half-bridge switch unit 3011 to transmit, to the output capacitor unit 3012, the electric energy provided by the input unit 303, so that the input unit 303 charges the output capacitor unit 3012. The controller 305 may further send a control signal or a drive signal to the half-bridge switch unit 301. After receiving the control signal or the drive signal, the half-bridge switch unit 301 transmits, to the output capacitor unit 3012, the electric energy provided by the input unit 303. Alternatively, after receiving no control signal or drive signal, the half-bridge switch unit 301 does not transmit, to the output capacitor unit 3012, the electric energy provided by the input unit 303.

In addition, to prevent an excessively large current in the circuit during charging from affecting performance of a switch in the half-bridge switch unit 3011, the controller 305 may further control duration for which the half-bridge switch unit 3011 transmits, to the output capacitor unit 3012, the electric energy provided by the input unit 303. For example, the controller 305 continuously sends the control signal or the drive signal to the half-bridge switch unit 3011 for preset duration. The half-bridge switch unit 3011 continuously transmits, to the output capacitor unit 3012 for the preset duration, the electric energy provided by the input unit 303. The preset duration may be shorter than one control period.

However, a voltage increase of the output capacitor unit 3012 varies with duration for which the output capacitor unit 3012 is charged. That is, a voltage increase at two ends of the output capacitor unit 3012 varies with duration for which the controller 305 sends the control signal or the drive signal to the half-bridge switch unit 3011. For example, the controller 305 may continuously send the control signal or the drive signal to the half-bridge switch unit 3011 for first specified duration. Alternatively, the controller 305 may continuously send the control signal or the drive signal to the half-bridge switch unit 3011 for second specified duration. If the first specified duration and the second specified duration are different values, a voltage increment obtained after the output capacitor unit 3012 is charged for the first specified duration is different from a voltage increment obtained after the output capacitor unit 3012 is charged for the second specified duration.

The output capacitor unit 3012 provided in this embodiment of this application may be charged for a plurality of times. The controller 305 may control the half-bridge switch unit 3011 for a plurality of times to transmit the electric energy in the resonant unit 3013 to the output capacitor unit 3013. After the resonant unit 3013 is charged again, the controller 305 may control the half-bridge switch unit 3011 to transmit the electric energy in the resonant unit 3013 to the output capacitor unit 3012. Duration for which the output capacitor unit 3012 is charged each time may be the same or may be different.

The controller 305 may further set a ratio of the first voltage to the second voltage based on different scenarios. The flipped conversion circuit provided in this embodiment of this application may be applied to scenarios, such as boost conversion, buck conversion, and polarity conversion. In the boost conversion scenario, the second voltage may be greater than the first voltage. In the buck conversion scenario, the second voltage may be less than the first voltage. In the polarity conversion scenario, the second voltage and the first voltage may be opposite numbers of each other. In this embodiment of this application, a range of the second voltage may be determined based on a range of the first voltage provided by the input unit 303. Alternatively, the flipped conversion circuit 300 provided in this embodiment of this application may be applied to another voltage conversion scenario. Details are not excessively described herein again.

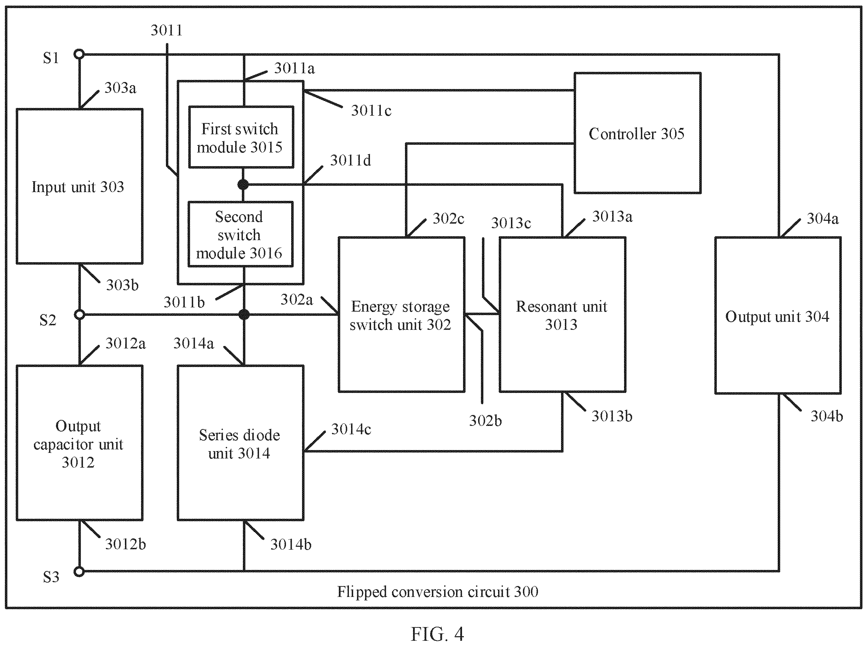

As shown in FIG. 4, in a possible implementation, the half-bridge switch unit 3011 may include a first switch module 3015 and a second switch module 3016. The first switch module 3015 includes at least one switch device, and the second switch module 3016 includes at least one switch device. One end of the first switch module 3015 is connected to S1_ the other end is connected to one end of the second switch module 3016, and the first end 3013a of the resonant unit 3013 is connected between the first switch module 3015 and the second switch module 3016.

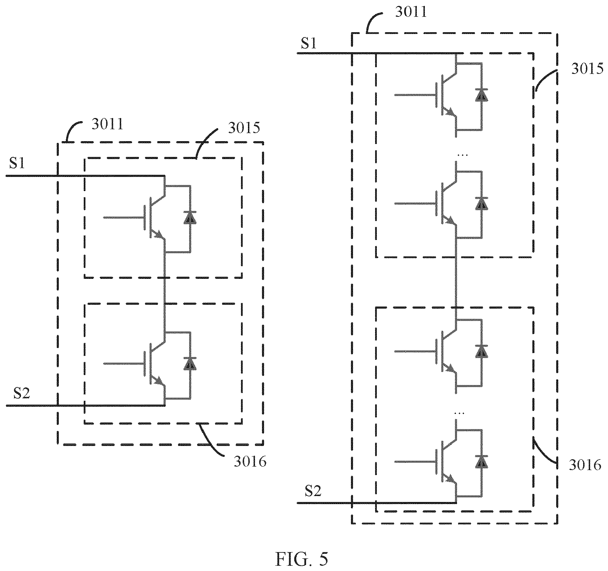

As shown in FIG. 5, the first switch module 3015 and the second switch module 3016 each include one switch device, a first electrode of the switch device in the first switch module 3015 is connected to S1, a second electrode of the switch device in the first switch module 3015 is connected to a first electrode of the switch device in the second switch module 3016, and a second electrode of the switch device in the second switch module 3016 is connected to S2. One end of the first inductor is connected to the second electrode of the switch device in the first switch module 3015.

In a possible implementation, the first switch module 3015 and the second switch module 3016 each include a plurality of switch devices. The switch devices in the first switch module 3015 and the switch devices in the second switch module 3016 may be connected in series, or may be connected in parallel, or may be connected to each other in a serial and parallel connection manner. This is not excessively limited herein, and should be known by a person skilled in the art.

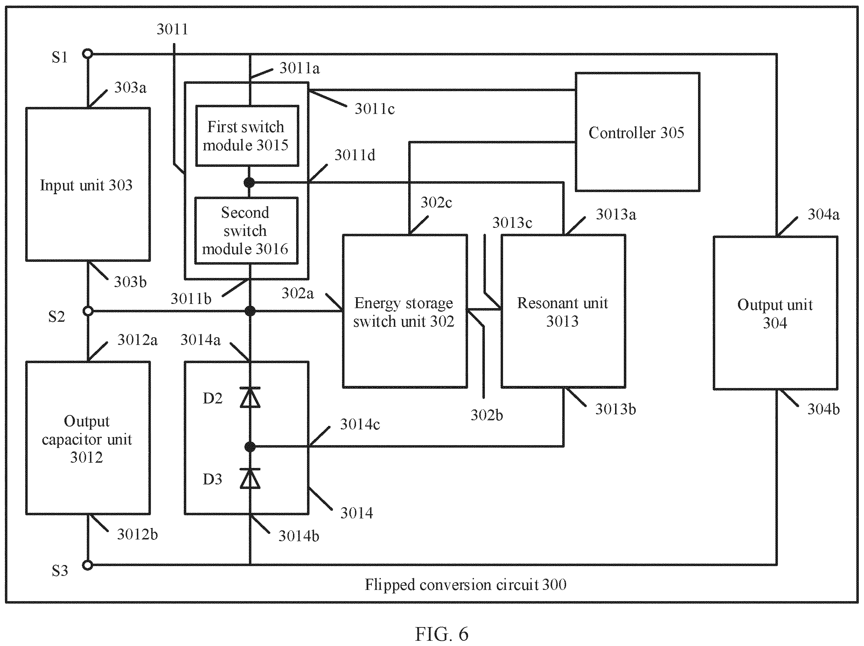

The series diode unit 3014 in this embodiment of this application may also be referred to as a clamping unit. The clamping unit may be configured to limit a voltage of the second connection end S2 not to change. As shown in FIG. 6, in a possible implementation, the series diode unit 3014 includes a second diode D2 and a third diode D3. A negative electrode of D2 is connected to S2, a positive electrode of D2 is connected to a negative electrode of D3, and a positive electrode of D3 is connected to S3. The second end of the first inductor in the resonant unit 3013 is connected between D2 and D3.

When a back end connected to the output unit 304 in this embodiment of this application requires a relatively high second voltage, based on the architecture in the foregoing embodiment, the controller 305 may convert, by controlling the switch device in the half-bridge switch unit 3011 and the switch device in the energy storage switch unit 302, the first voltage that is input by the input unit 303 into the second voltage, so that a ratio of the first voltage to the second voltage is a first target ratio.

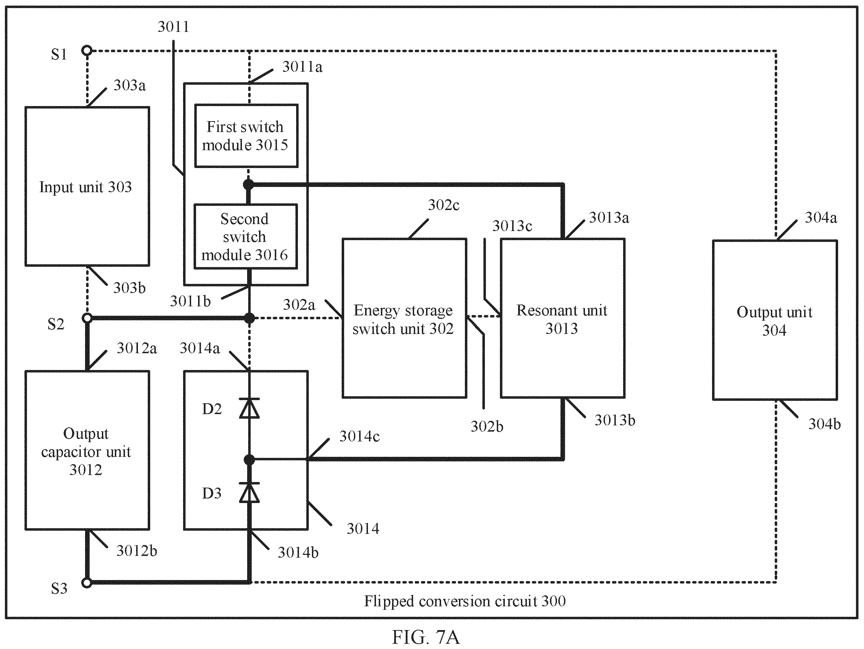

FIG. 7A to FIG. 7C show a closed circuit and an open circuit in the flipped conversion circuit 300. The controller 305 may be configured to control the flipped conversion circuit to work in different states, and t0 to t4 are different states of the flipped conversion circuit 300 in different time sequences. A black solid line is used to represent a closed circuit in the flipped conversion circuit 300, and a dashed line represents an open circuit in the flipped conversion circuit 300.

As shown in FIG. 7A, in the phases t0 and t1, the controller 305 may control the switch device in the second switch module 306 to be turned on, so that the second connection end S2, the second switch module 3016, the resonant unit 3013, D3, and the third connection end S3 form a closed circuit, and the first capacitor and the first inductor that are in the resonant unit 3013 form resonance. The resonant unit 3013 reversely charges an output capacitor in the output capacitor unit 3012 by using D3 in the series diode unit 3014. When the switch device in the second switch module 306 has different turn-on duration, voltage increases at two ends of the output capacitor in the output capacitor unit 3012 are also different. The specific turn-on duration may be determined based on the ratio of the first voltage to the second voltage. A larger second voltage indicates longer turn-on duration of the switch device in the second switch module 306.

In the phases t1 and t2, when detecting that a resonance current on the first inductor in the resonant unit 3013 is 0, the controller 305 controls the switch device in the second switch module to be turned off.

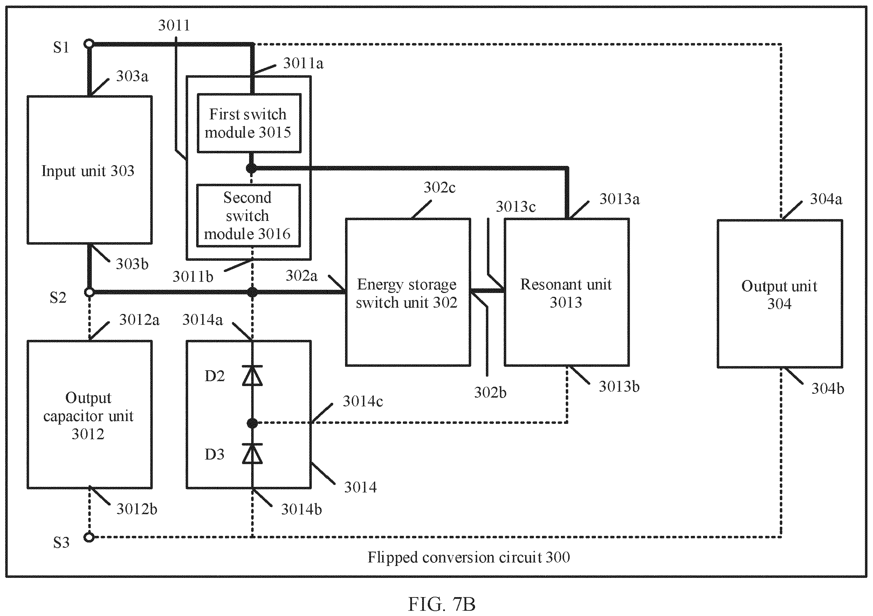

As shown in FIG. 7B, in the phases t2 and t3, the controller 305 may control the switch device in the first switch module 3015 to be turned on and the switch device in the energy storage switch unit to be turned on, so that the first connection end S1, the first switch module 3015, the resonant unit 3013, the energy storage switch unit 302, and the second connection end S2 form a closed circuit, and the first voltage charges the first inductor.

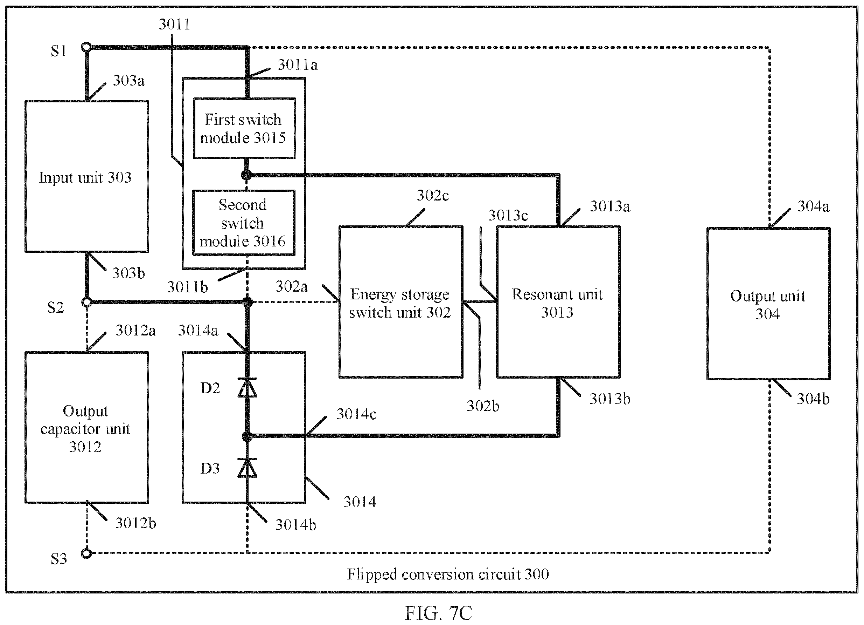

As shown in FIG. 7C, in the phases t3 and t4, the controller 305 may control the switch device in the first switch module 3015 to be turned on, so that the first connection end S1, the first switch module 3015, the resonant unit 3013, D2, and the second connection end S2 form a closed circuit, and the first capacitor and the first inductor that are in the resonant unit 3013 form resonance.

In the phases t4 and t0, when detecting that the resonance current on the first inductor in the resonant unit 3013 is 0, the controller 305 controls the switch device in the first switch module to be turned off. It should be noted that a manner in which the controller 305 is configured to control the flipped conversion circuit 300 to work in different states may be a cyclic execution manner of "t0 and t1 phases to t1 and t2 phases...". A specific start state of a cycle is not specifically limited. The t0 and t1 phases may be used as the start state, or the t1 and t2 phases may be used as the start state. This is not specifically limited. The controller 305 may further control duration of performing each phase. For example, duration of a high-level pulse or duration of a low-level pulse is controlled, to control turn-on duration of the switch device in the first switch module 3015 in the phases t0 and t1.

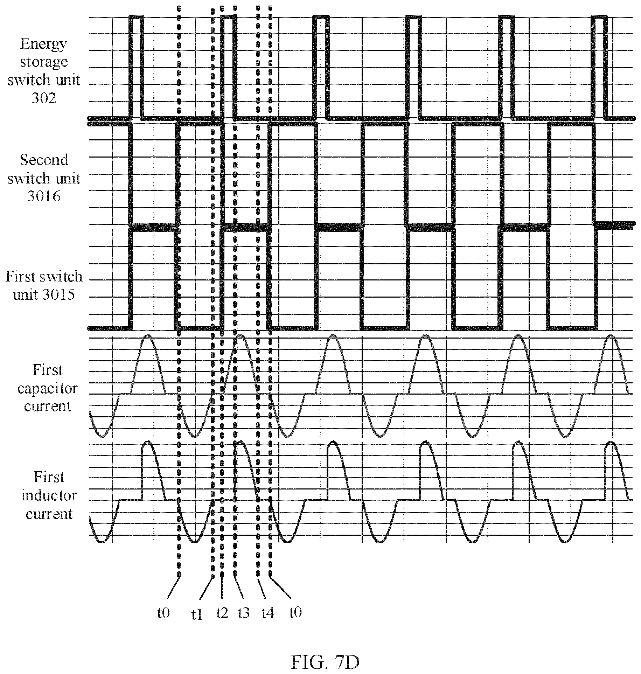

FIG. 7D is a status sequence diagram of some switch devices and some power devices in the flipped conversion circuit 300.

By cyclically performing the foregoing steps, the controller 305 boosts and flips the first voltage that is input by the input unit 303, and then jointly outputs the first voltage and the first voltage that is boosted and flipped, to obtain a second voltage, so that the output unit 304 outputs the second voltage.

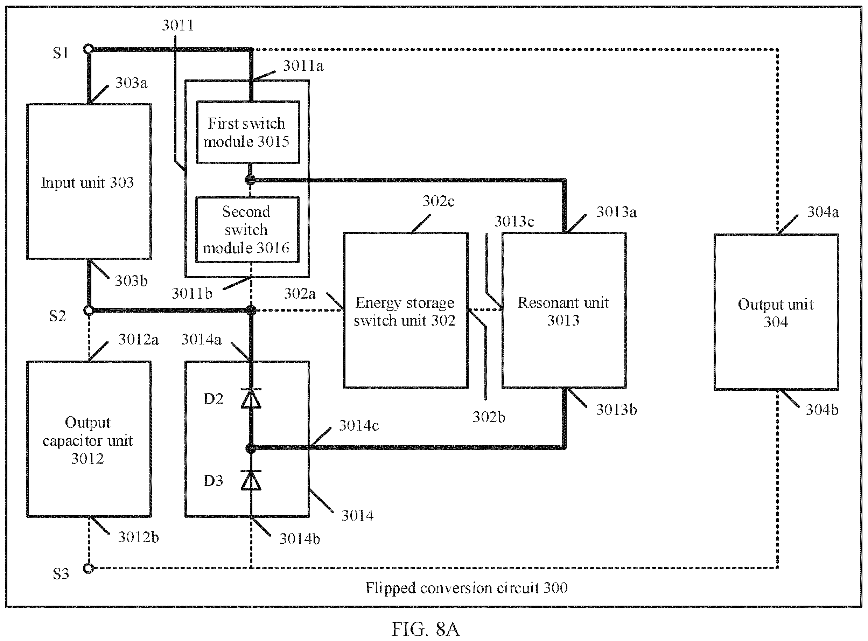

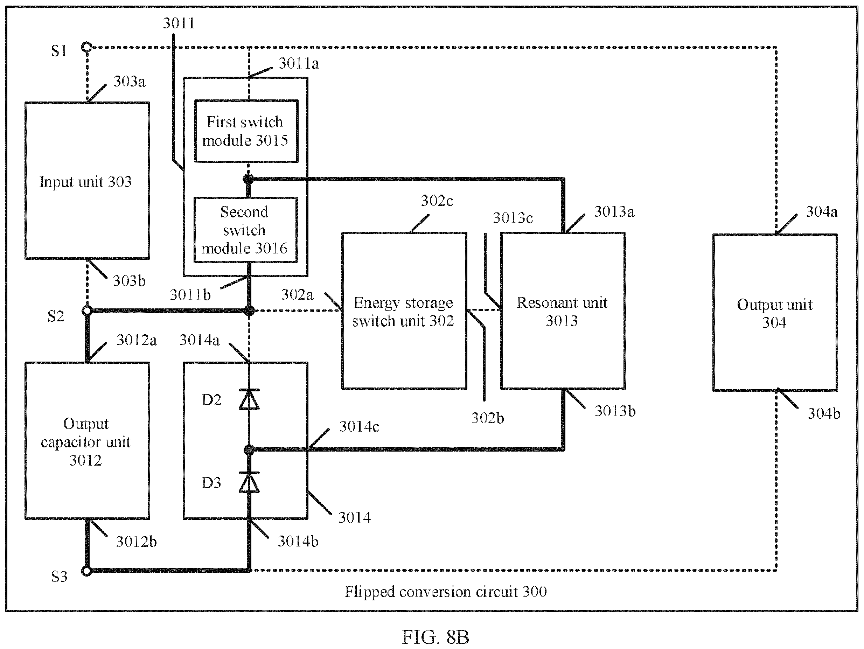

In some scenarios, a back-end circuit does not need an excessively large voltage input, and obtains the second voltage only through a joint output of the first voltage and the flipped first voltage. The second voltage is twice the first voltage. Optionally, when a ratio of the first voltage to the second voltage is set to a second target ratio, in a possible implementation, FIG. 8A and FIG. 8B show a closed circuit and an open circuit in the flipped conversion circuit 300. The controller 305 may be configured to control the flipped conversion circuit to work in different states, and t0 to t3 are different states of the flipped conversion circuit 300 in different time sequences. A black solid line is used to represent a closed circuit in the flipped conversion circuit 300, and a dashed line represents an open circuit in the flipped conversion circuit 300.

As shown in FIG. 8A, in the phases t0 and t1, the controller 305 may control the switch device in the second switch module 3016 to be turned on, so that the first capacitor and the first inductor that are in the resonant unit 3013 form resonance.

In the phases t1 and t2, when detecting that a resonance current on the first inductor in the resonant unit 3013 is 0, the controller 305 controls the switch device in the second switch module 3016 to be turned off.

As shown in FIG. 8B, in the phases t2 and t3, the controller 305 controls the switch device in the first switch module 3015 to be turned on, so that the first capacitor and the first inductor that are in the resonant unit 3013 form resonance.

In the phases t3 and t0, when detecting that the resonance current on the first inductor in the resonant unit 3013 is 0, the controller 305 controls the switch device in the first switch module 3015 to be turned off.

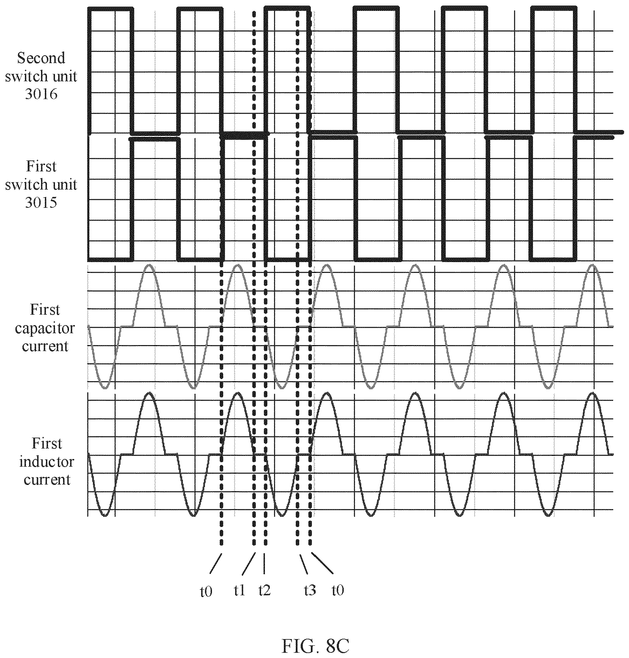

FIG. 8C is a status sequence diagram of some switch devices and some power devices in the flipped conversion circuit 300.

By cyclically performing the foregoing steps, the controller 305 flips the first voltage that is input by the input unit 303, and then jointly outputs the first voltage and the flipped first voltage, so that the output unit 304 outputs a second voltage.

Based on the circuit structure provided in this embodiment of this application, compared with an existing topology structure, for the structure of the flipped conversion circuit provided in this application, costs of elements, occupied board space, and device losses are obviously reduced. In addition, compared with a conventional technology, based on the structure provided in this application, a quantity of diodes is further significantly reduced, so that the switch device in the flipped conversion circuit 300 has a zero-voltage turn-on condition, and switch losses are reduced.

In a possible implementation, there are a plurality of manners of connecting the half-bridge switch unit 3011 and a device externally connected to the half-bridge switch unit 3011. A plurality of specific structures of the flipped conversion circuit are described in the following embodiments.

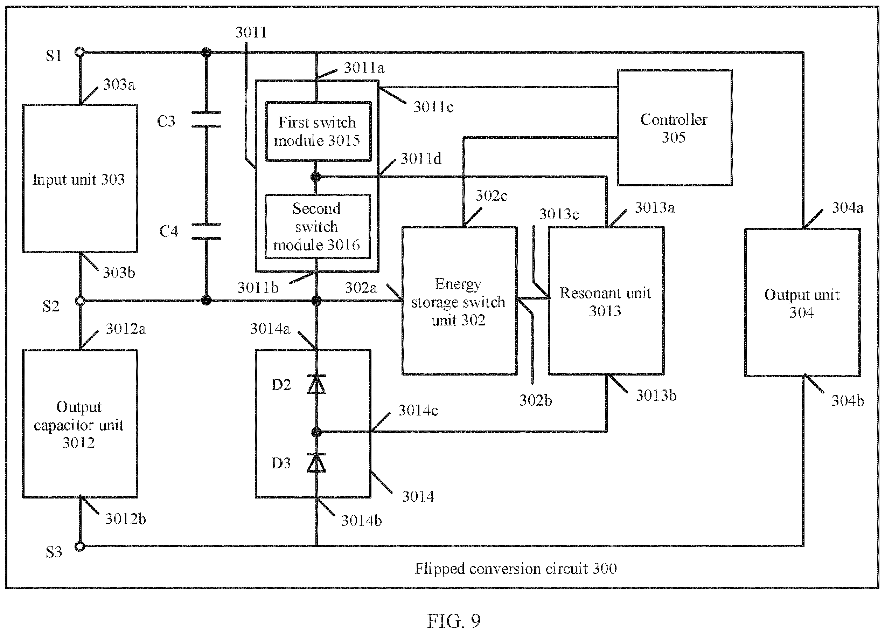

Structure 1: As shown in FIG. 9, based on the basic structure provided in the foregoing embodiment, the flipped conversion circuit 300 may further include a second capacitor C2 and a third capacitor C3. One end of the second capacitor C2 is connected to S1, the other end of the second capacitor C2 is connected to one end of the third capacitor C3, and the other end of the third capacitor C3 is connected to S2. The second capacitor C2 and the third capacitor C3 may constitute an input capacitor unit, and the input capacitor unit may also store electric energy provided by the input unit 303.

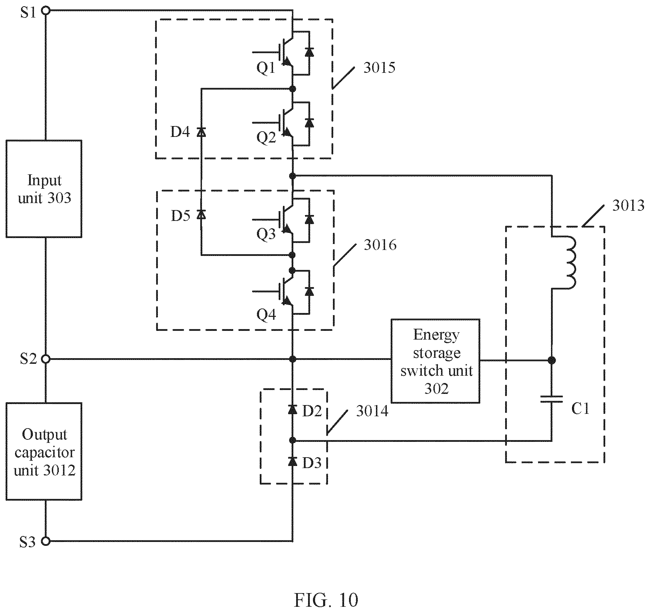

Structure 2: As shown in FIG. 10, the first switch module 3015 includes a first switching transistor Q1, a second switching transistor Q2, and a fourth diode D4. The second switch module 3016 includes a third switching transistor Q3, a fourth switching transistor Q4, and a fifth diode D5. A first electrode of Q1 is connected to S1, a second electrode of Q1 is connected to a first electrode of Q2, the second electrode of Q1 is connected to the first end of the first capacitor, and a negative electrode of D4 is connected to the second electrode of Q1. A first electrode of Q3 is connected to the first end of the first capacitor, a second electrode of Q3 is connected to a first electrode of Q4, a second electrode of Q4 is connected to S2, a positive electrode of D5 is connected to the second electrode of Q3. A positive electrode of D4 is connected to a negative electrode of D5.

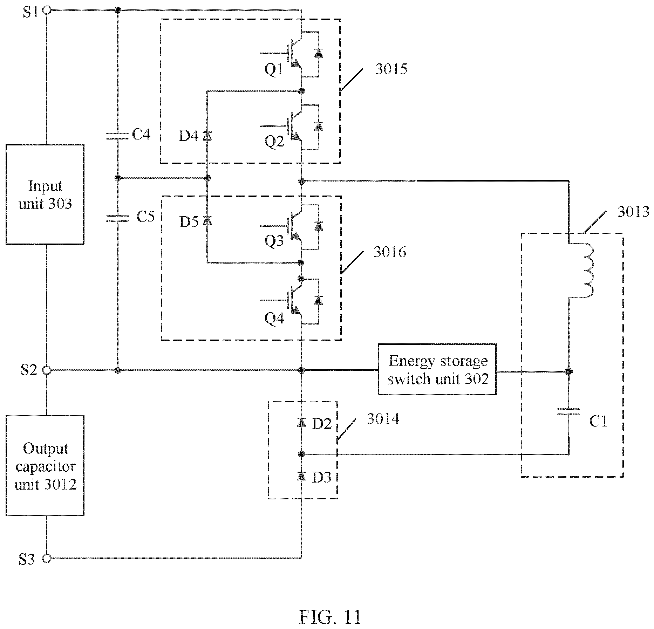

Structure 3: As shown in FIG. 11, based on the structure 2, the flipped conversion circuit 300 further includes a fourth capacitor C4 and a fifth capacitor C5. One end of the fourth capacitor C4 is connected to S1, the other end of the fourth capacitor C4 is connected to one end of the fifth capacitor C5, the other end of the fifth capacitor C5 is connected to S2, and the other end of the fourth capacitor C4 is further connected to the positive electrode of D4.

In addition, an element structure of the half-bridge switch unit 3011 may further have the following types of variants, and all the variants can implement a voltage flipping function.

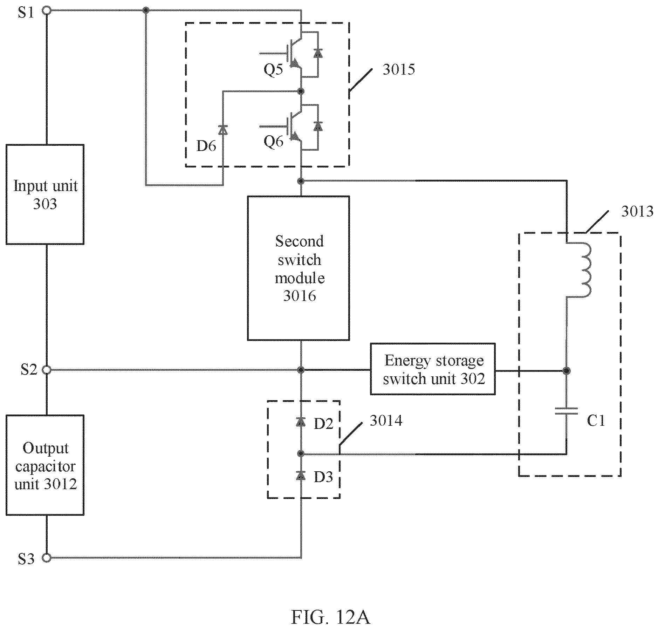

Structure 4: As shown in FIG. 12A, the first switch module 3015 in the flipped conversion circuit 300 includes a fifth switching transistor Q5, a sixth switching transistor Q6, and a fourth diode D6. A first electrode of Q5 is connected to S1, a second electrode of Q5 is connected to a first electrode of Q6, and the second electrode of Q5 is connected to the first end of the first inductor. A negative electrode of D6 is connected to the second electrode of Q5, and a positive electrode of D6 is connected to S1.

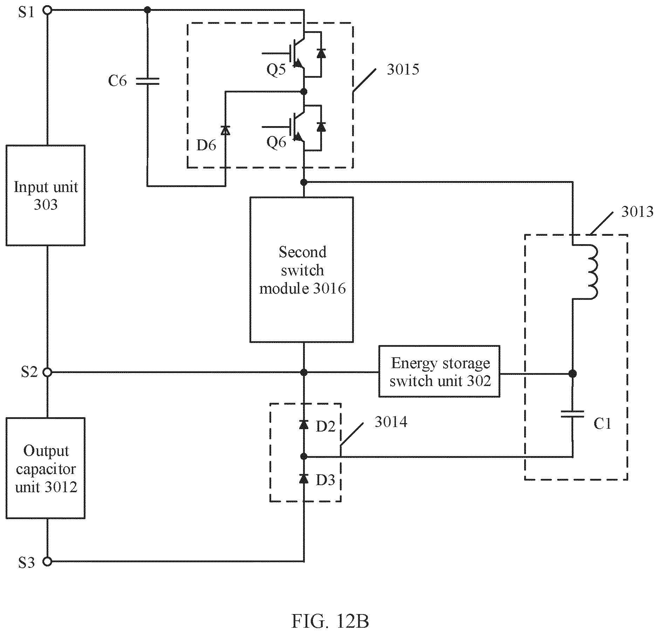

Structure 5: Based on the structure 4, as shown in FIG. 12B, the flipped conversion circuit 300 further includes a sixth capacitor C6. The sixth capacitor C6 is connected between the positive electrode of D6 and S1.

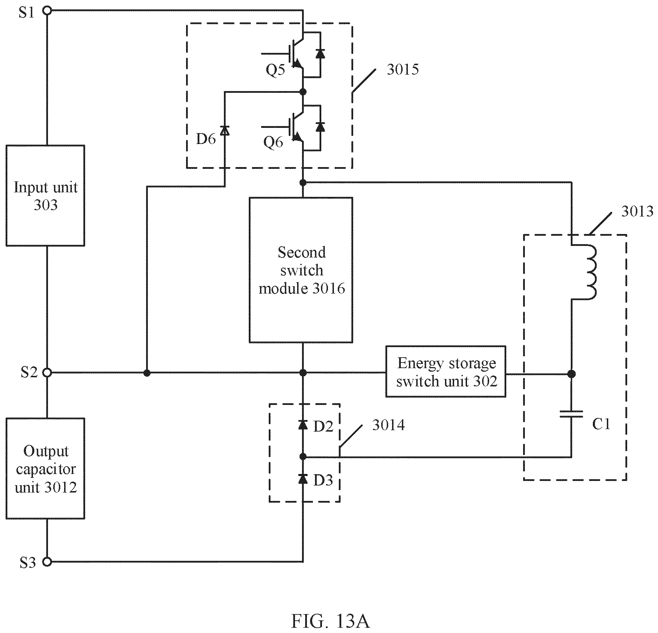

Structure 6: As shown in FIG. 13A, the first electrode of Q5 is connected to S1, the second electrode of Q6 is connected to a first electrode of Q6, and a second electrode of Q6 is connected to the first end of the first inductor. A negative electrode of D6 is connected to the second electrode of Q5, and the positive electrode of D6 is connected to S2.

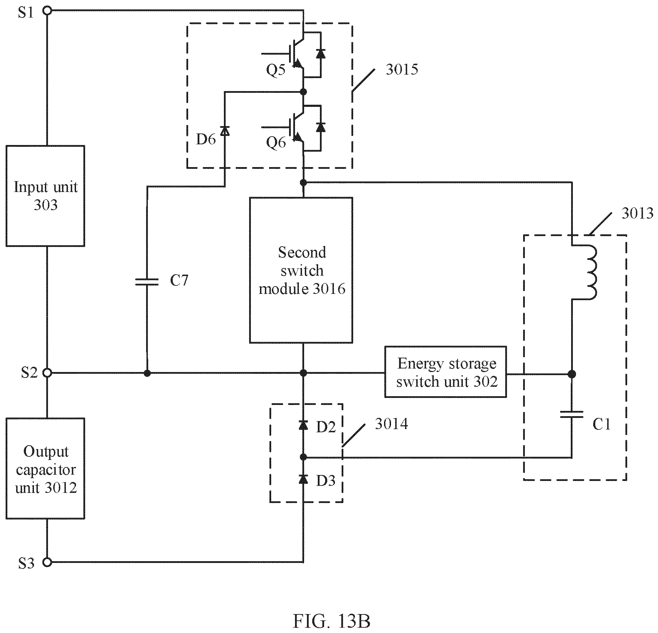

Structure 7: Based on the structure 6, as shown in FIG. 13B, a seventh capacitor C7. The seventh capacitor C7 is connected between the positive electrode of D6 and S2.

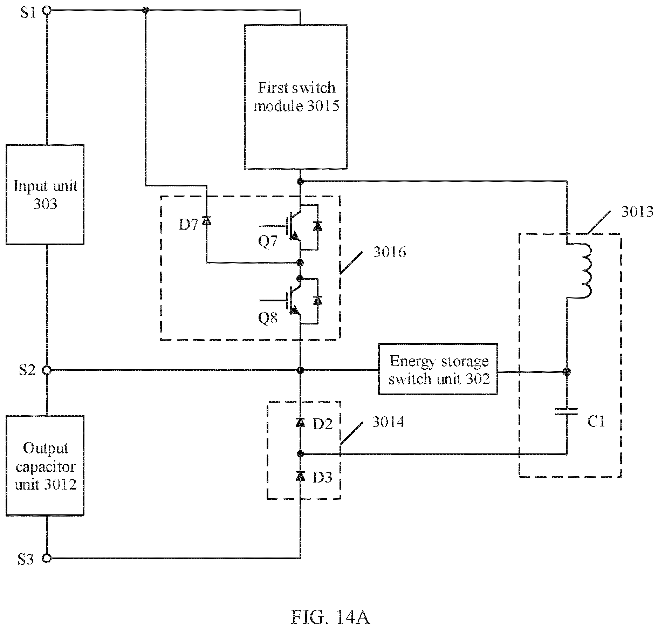

Structure 8: As shown in FIG. 14A, the second switch module 3016 includes a third switching transistor Q7, a fourth switching transistor Q8, and a seventh diode D7. A first electrode of Q7 is connected to the first end of the first inductor, a second electrode of Q7 is connected to a first electrode of Q8, and a second electrode of Q8 is connected to S2. A positive electrode of D7 is connected to the second electrode of Q7, and a negative electrode of D7 is connected to S1.

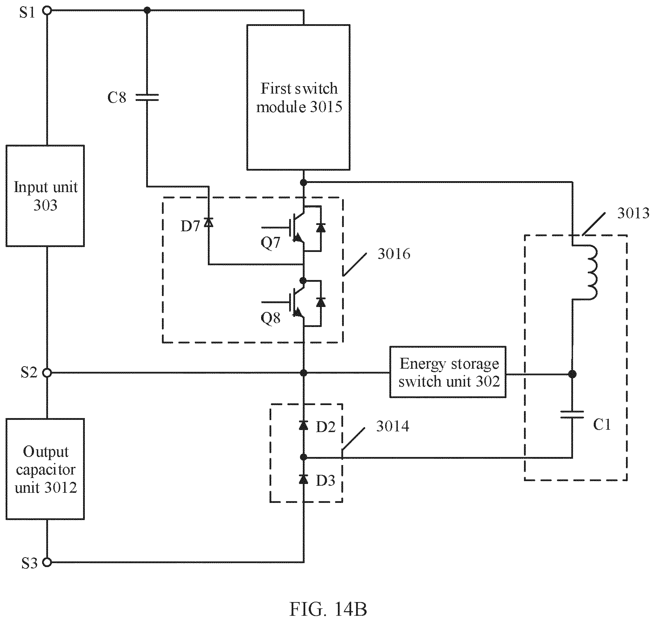

Structure 9: Based on the structure 8, as shown in FIG. 14B, the flipped conversion circuit 300 further includes an eighth capacitor C8. The eighth capacitor C8 is connected between the negative electrode of D7 and S1.

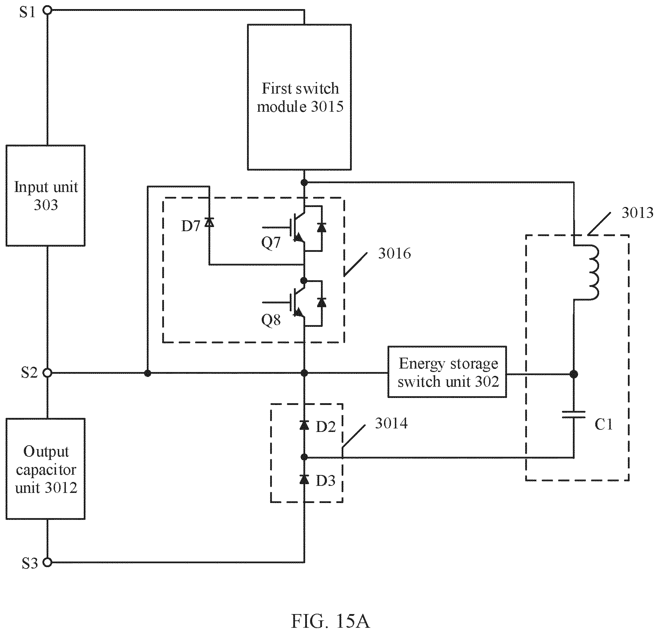

Structure 10: As shown in FIG. 15A, the first electrode of Q7 is connected to the first end of the first inductor, the second electrode of Q7 is connected to a first electrode of Q8, and the second electrode of Q8 is connected to S2. The positive electrode of D7 is connected to the second electrode of Q7, and the negative electrode of D7 is connected to S2.

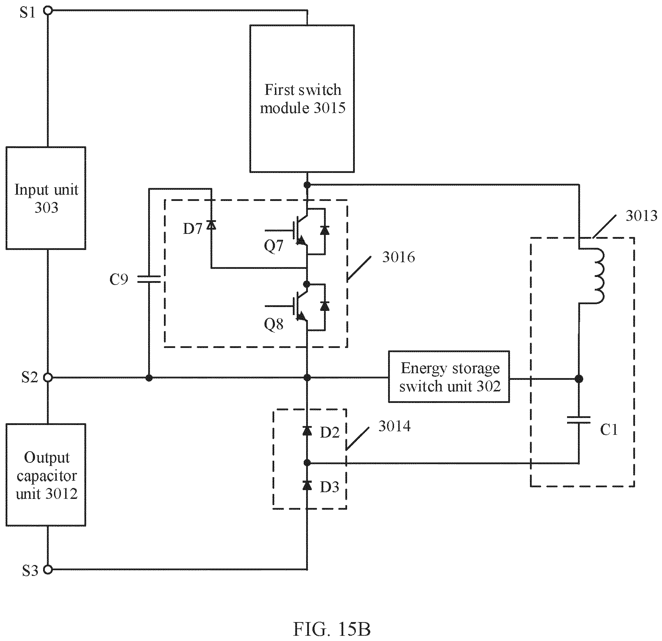

Structure 11: Based on the structure 10, as shown in FIG. 15B, a ninth capacitor C9 is connected between the negative electrode of the D7 and S2.

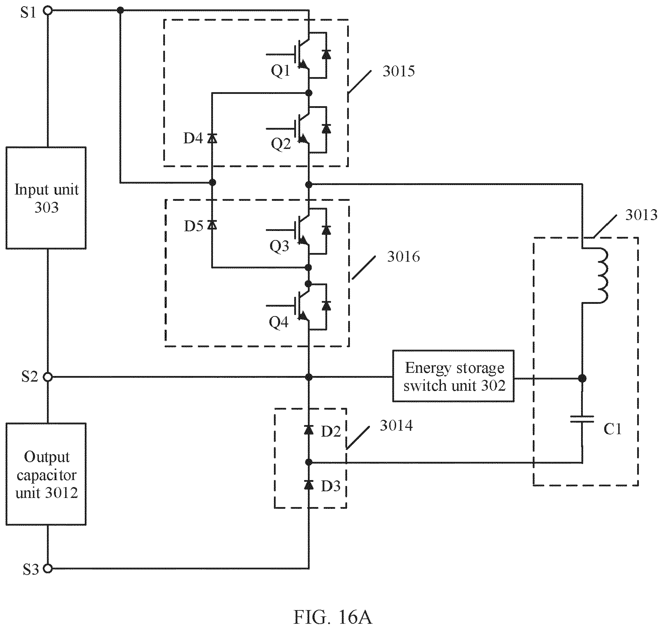

Structure 12: Based on the structure 2, as shown in FIG. 16A, the positive electrode of D4 is further connected to S1.

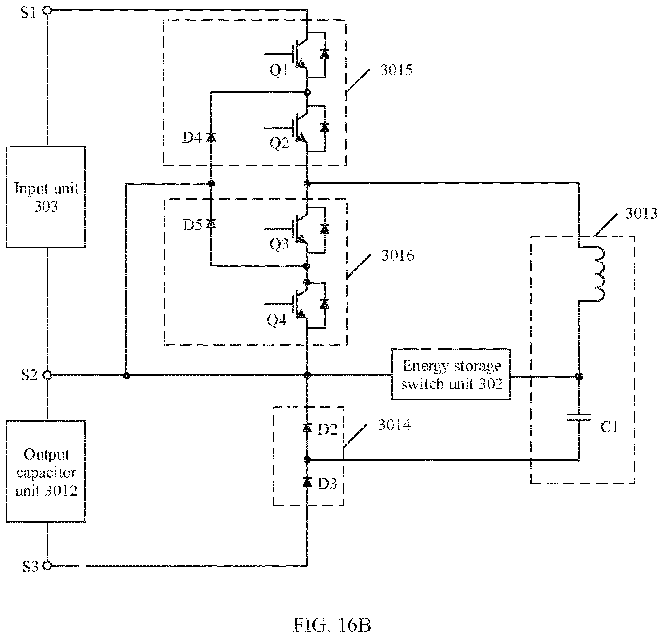

Structure 13: Based on the structure 2, as shown in FIG. 16B, the positive electrode of D4 is further connected to S2.

It should be noted that the flipped conversion circuit 300 is not limited to a structure defined in the foregoing structure 1 to structure 13. All components in the flipped conversion circuit 300 may be combined in series or in parallel, provided that functions of the foregoing combined components are consistent with those in this embodiment of this application. This is not excessively limited herein.

Based on the architecture in the foregoing embodiment, the controller 305 may convert, by controlling the switch device in the half-bridge switch unit 3011 and the switch device in the energy storage switch unit 302, the first voltage that is input by the input unit 303 into the second voltage, so that a ratio of the first voltage to the second voltage is a first target ratio.

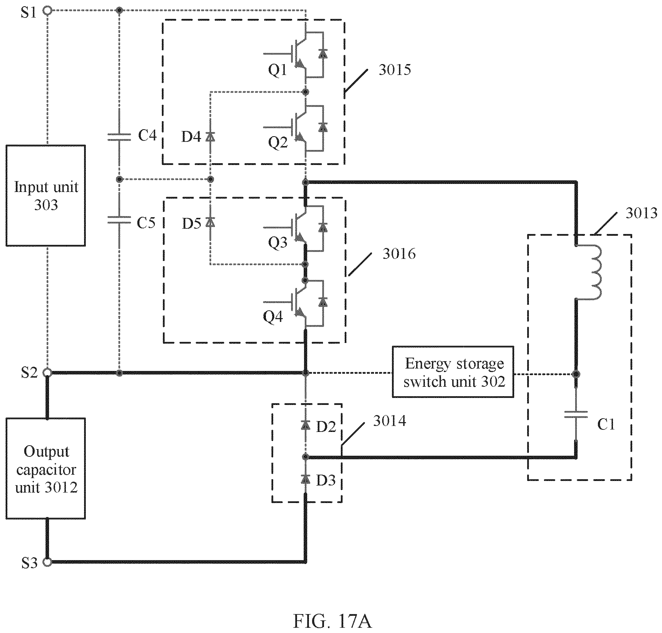

Herein, the structure 3 is used as an example for control, and a specific manner of controlling the flipped conversion circuit by the controller 305 is described. FIG. 17A to FIG. 17D show a closed circuit and an open circuit in the flipped conversion circuit 300, and t0 to t5 are different states of the flipped conversion circuit 300 in different time sequences. A black solid line is used to represent a closed circuit in the flipped conversion circuit 300, and a dashed line represents an open circuit situation in the flipped conversion circuit 300.

As shown in FIG. 17A, in the phases t0 and t1, the controller 305 may control Q3 and Q4 that are in the second switch module 3016 to be turned on, so that the first capacitor C1 and the first inductor that are in the resonant unit 3013 form resonance. The resonant unit 3013 reversely charges the output capacitor in the output capacitor unit 3012 by using D3 in the series diode unit 3014.

In the phases t1 and t2, when detecting that a resonance current on the first inductor in the resonant unit 3013 is 0, the controller 305 controls Q3 and Q4 that are in the second switch module 3016 to be turned off.

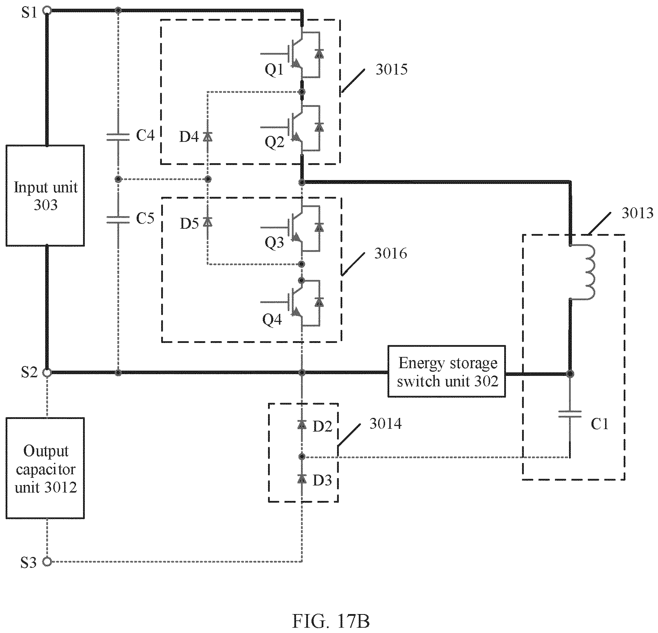

As shown in FIG. 17B, in the phases t2 and t3, the controller 305 may control Q1 and Q2 that are in the first switch module 3015 to be turned on and the switch device in the energy storage switch unit 302 to be turned on, so that the first voltage charges the first inductor.

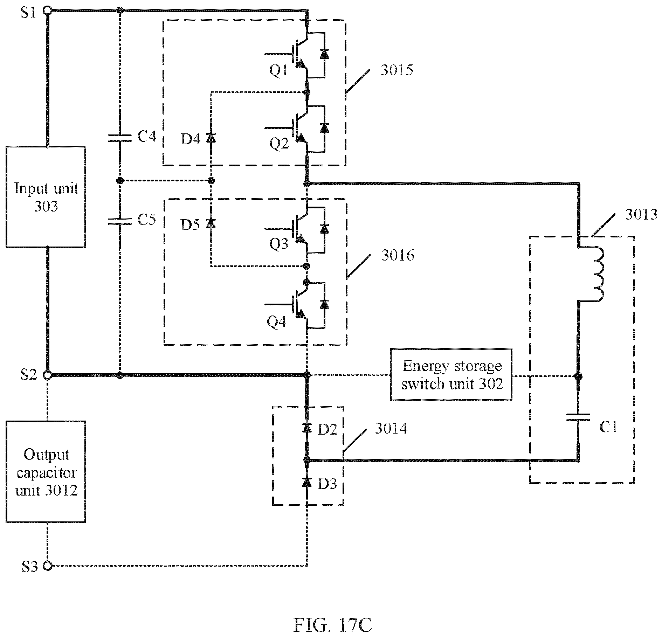

As shown in FIG. 17C, in the phases t3 and t4, the controller 305 may control Q1 and Q2 that are in the first switch module to be turned on, so that the first capacitor and the first inductor that are in the resonant unit 3013 form resonance.

In the phases t4 and t5, when detecting that the resonance current on the first inductor in the resonant unit 3013 is 0, the controller 305 controls Q1 and Q2 that are in the first switch module 3015 to be turned off.

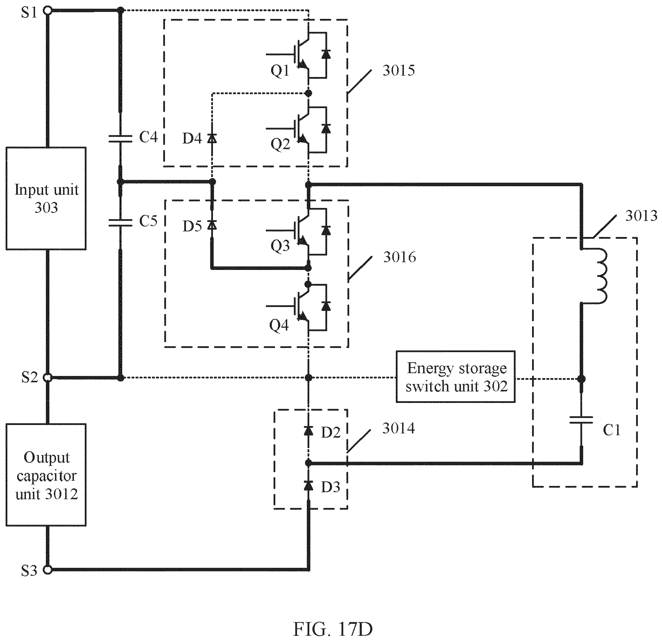

As shown in FIG. 17D, in the phases t5 and t0, the controller 305 may control Q3 in the first switch module 3015 to be turned on, so that an inductance current on the first inductor in the resonant unit 3013 reversely charges the output capacitor in the output capacitor unit 3012 by using Q3, D5, and D3.

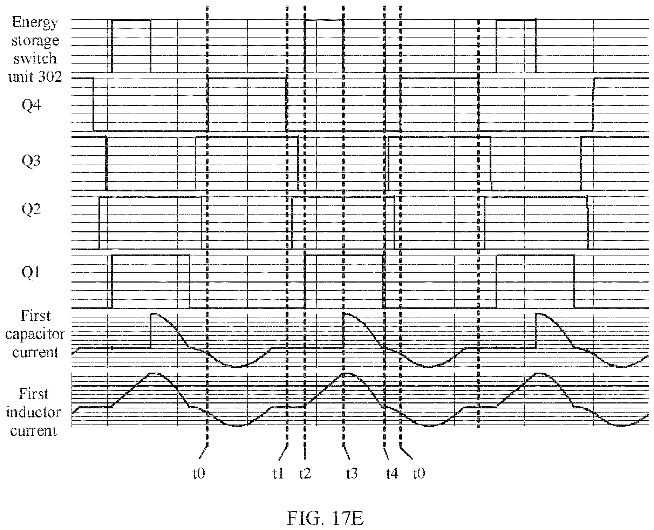

FIG. 17E is a status sequence diagram of some switch devices and some power devices in the flipped conversion circuit 300.

Specifically, in a working process of the flipped conversion circuit 300, energy is mainly stored for the capacitor in the output capacitor unit 3012 by using the newly added energy storage switch unit 302. In this case, an inductance current increases linearly. When a switching transistor in the energy storage switch unit 302 is turned off, the first inductor and the first capacitor that are in the resonant unit generate resonance, and continue storing energy for the capacitor in the output capacitor unit 3012, until the inductance current of the first inductor decreases to 0. However, after the switch devices Q3 and Q4 in the second switch module 3016 are turned on, the first inductor and the first capacitor generate resonance, so that the capacitor in the output capacitor unit 3012 releases energy, until the inductance current of the first inductor decreases to 0. A value of the second voltage that is input to the output unit 304 may be adjusted by adjusting a turn-on duty cycle of the switch device in the energy storage switch unit 302.

In addition, based on the flipped conversion circuit 300 and the control solution that are provided in this application, the switch devices Q1 and Q2 may implement soft switching, the switch device in the energy storage switch unit 302 may implement zero-current turn-on, the diode D4 may implement zero-current turn-off, the switch devices Q3 and Q4 may implement soft switching, and the diode D5 may implement zero-current turn-on. Therefore, losses of a semiconductor in the flipped conversion circuit 300 provided in this application are relatively small. In addition, compared with a conventional technology, a quantity of inductors is obviously reduced, and an inductance value of the inductor needs to be designed only based on a requirement that resonance meets. Therefore, losses and costs of the entire circuit are reduced, and power density is obviously increased. Therefore, based on the circuit structure provided in this application, a volume, costs, and efficiency of the circuit can be effectively increased, and circuit complexity can be reduced.

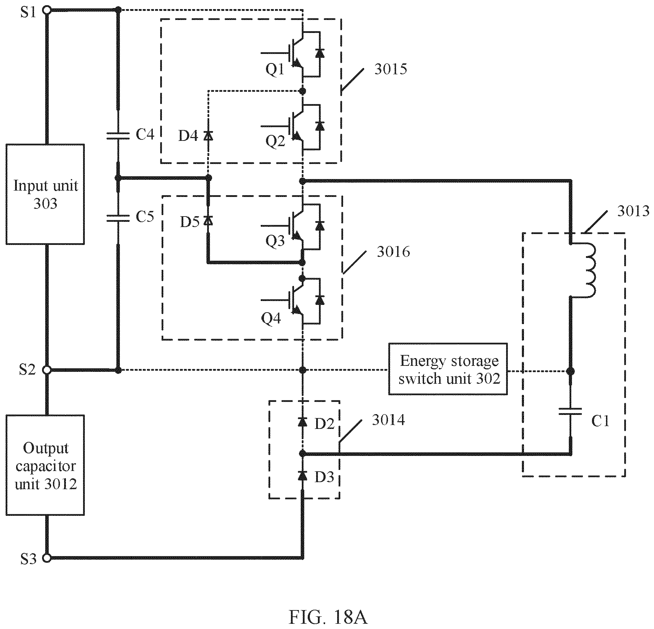

In some scenarios, a back-end circuit does not need an excessively large voltage input. The controller 305 controls the switch device in the half-bridge switch unit 3011 and the switch device in the energy storage switch unit 302 flip only the first voltage, and finally obtains the second voltage by using only a joint output of the first voltage and the flipped first voltage. The structure 3 is still used as an example. FIG. 18A to FIG. 18D show a closed circuit and an open circuit in the flipped conversion circuit 300, and t0 to t5 are different states of the flipped conversion circuit 300 in different time sequences. A black solid line is used to represent a closed circuit in the flipped conversion circuit 300, and a dashed line represents an open circuit in the flipped conversion circuit 300.

As shown in FIG. 18A, in the phases t0 and t1, when the ratio of the first voltage to the second voltage is set to the second target ratio, the controller 305 controls Q3 in the second switch module 3016 to be turned on, so that the inductance current on the first inductor in the resonant unit 3013 can reversely charge the output capacitor in the output capacitor unit 3012 by using Q3, D5, and D3.

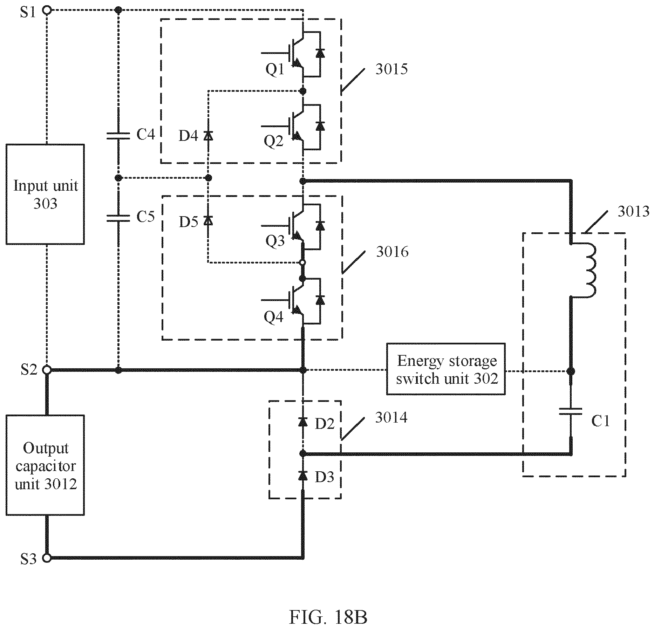

As shown in FIG. 18B, in the phases t1 and t2, the controller 305 may control Q3 and Q4 that are in the first switch module 3015 to be turned on, so that the first capacitor and the first inductor that are in the resonant unit 3013 form resonance.

In the phases t2 and t3, when detecting that a resonance current on the first inductor in the resonant unit 3013 is 0, the controller 305 controls Q3 and Q4 that are in the second switch module 3016 to be turned off.

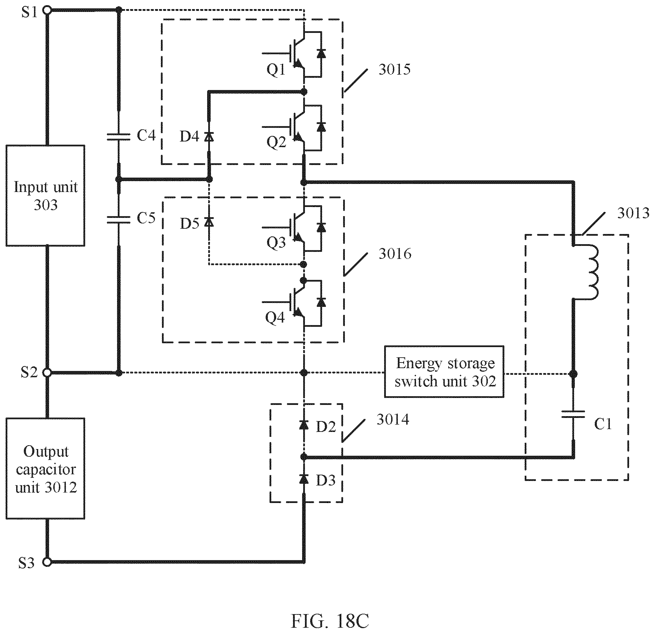

As shown in FIG. 18C, in the phases t3 and t4, the controller 305 may control Q2 in the second switch module 3016 to be turned on, so that the inductance current on the first inductor in the resonant unit 3013 reversely charges the output capacitor in the output capacitor unit 3012 by using Q2, D4, and D3.

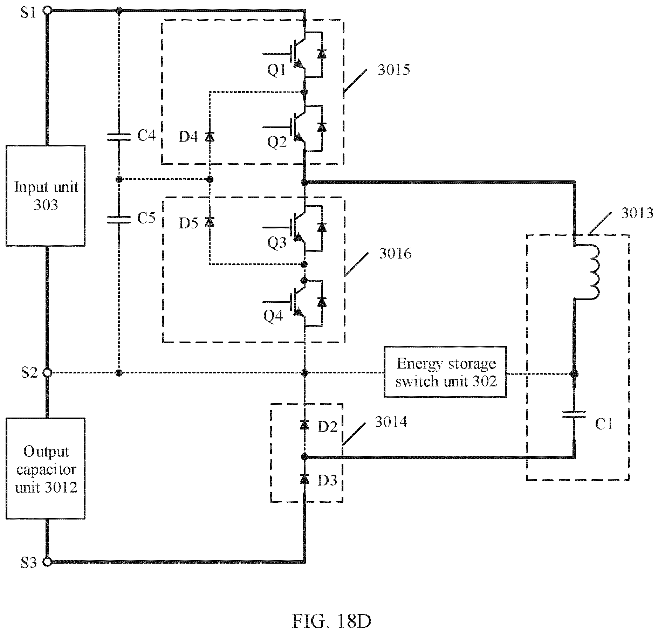

As shown in FIG. 18D, in the phases t4 and t5, the controller 305 may control Q1 and Q2 that are in the first switch module 3015 to be turned on, so that the first capacitor and the first inductor that are in the resonant unit 3013 form resonance.

In the phases t5 and t0, when detecting that the resonance current on the first inductor in the resonant unit 3013 is 0, the controller 305 controls Q1 and Q2 that are in the first switch module to be turned off.

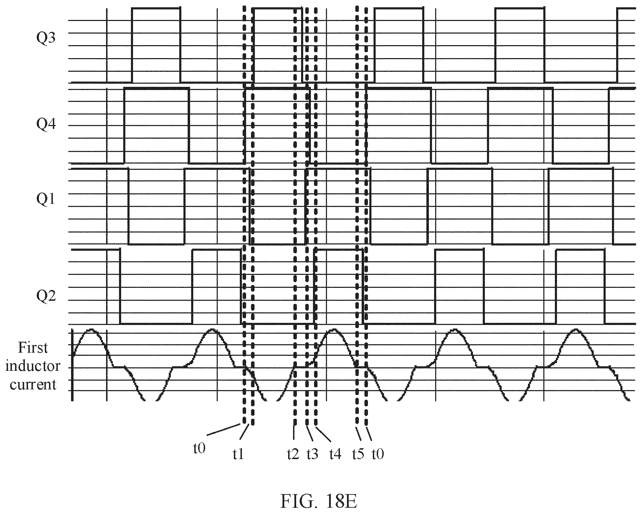

FIG. 18E is a status sequence diagram of some switch devices and some power devices in the flipped conversion circuit 300.

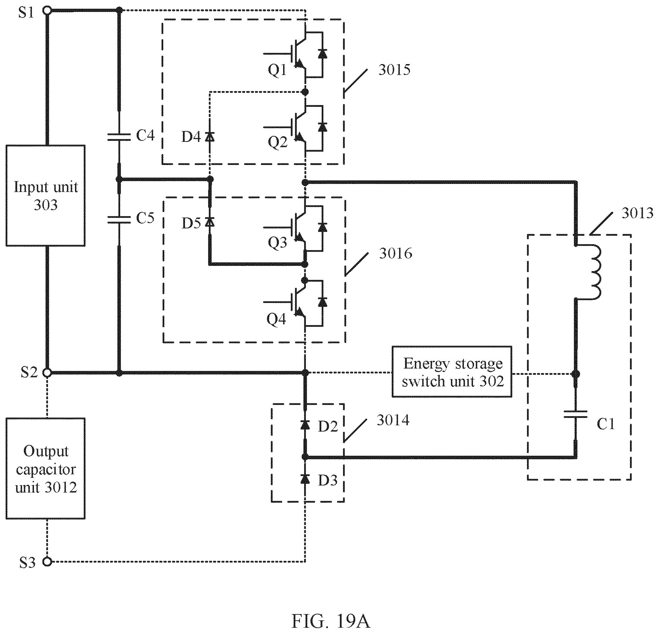

In some scenarios, a ratio of the first voltage to the second voltage is set to a third target ratio. When an upper limit of the third target ratio is greater than the first target ratio, or a turn-on voltage drop of a switch device in the flipped conversion circuit 300 is relatively large, specific control manners are different. The structure 3 is still used as an example. FIG. 19A to FIG. 19D show an open circuit and a closed circuit in the flipped conversion circuit 300, and t0 to t5 are different states of the flipped conversion circuit 300 in different time sequences. A black solid line is used to represent a closed circuit in the flipped conversion circuit 300, and a dashed line represents an open circuit situation in the flipped conversion circuit 300.

As shown in FIG. 19A, in the phases t0 to t1, the controller 305 controls Q3 in the second switch module 3016 to be turned on.

In the phases t1 and t2, when detecting that a resonance current on the first inductor in the resonant unit 3013 is 0, the controller controls Q3 in the second switch module 3016 to be turned off.

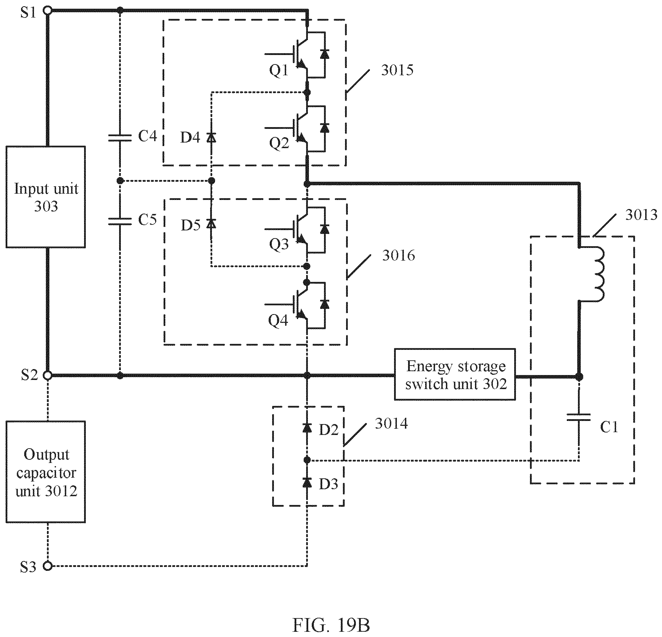

As shown in FIG. 19B, in the phases t2 and t3, the controller 305 controls Q1 and Q2 that are in the first switch module 3015 to be turned on and the switch device in the energy storage switch unit 302 to be turned on; and the first voltage charges the first inductor.

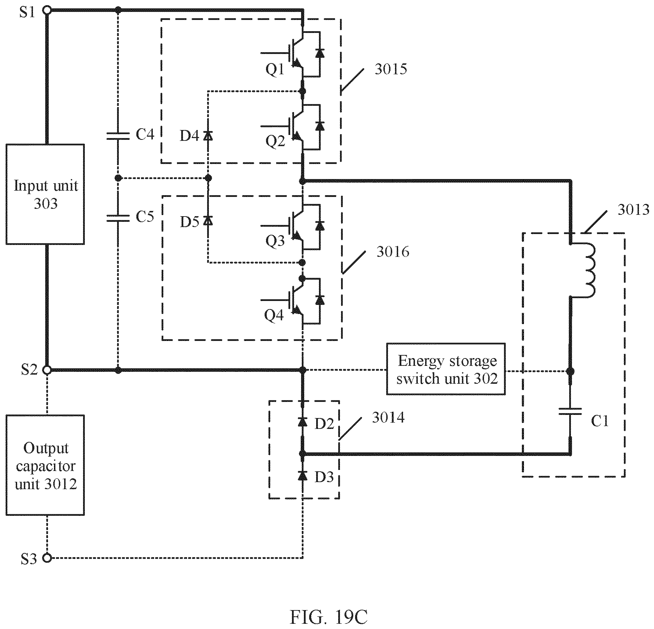

As shown in FIG. 19C, in the phases t3 and t4, the controller 305 controls Q1 and Q2 that are in the first switch module 3015 to be turned on and the switch device in the energy storage switch unit 302 to be turned off, so that the first capacitor and the first inductor that are in the resonant unit 3013 form resonance.

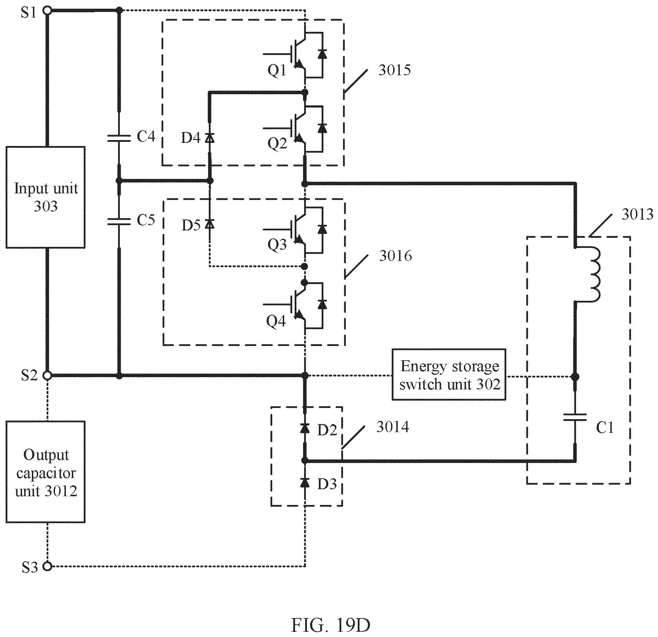

As shown in FIG. 19D, in the phases t4 and t0, the controller 305 controls Q3 in the second switch module 3016 to be turned on.

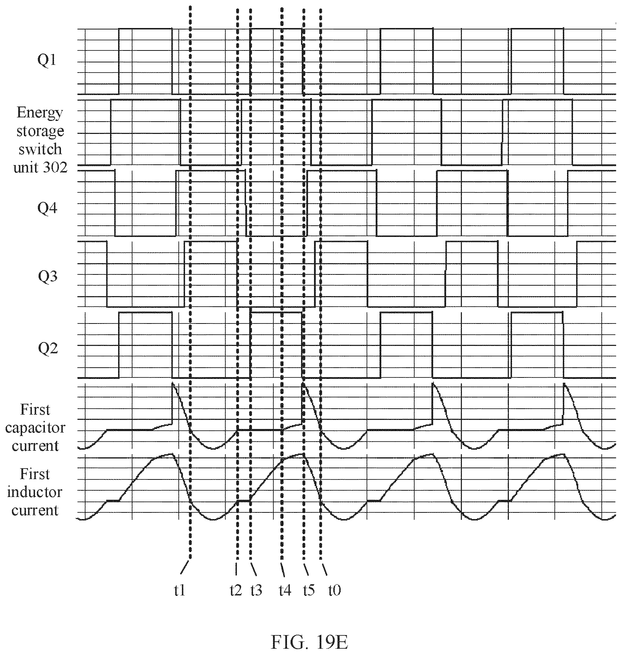

FIG. 19E is a status sequence diagram of some switch devices and some power devices in the foregoing flipped conversion circuit 300.

To reduce a turn-off voltage of the switch device in the energy storage switch unit 302, in a possible implementation, the energy storage switch unit 302 further includes a sixth capacitor. The sixth capacitor is connected to the first diode D1 in parallel, and the sixth capacitor is configured to eliminate a voltage peak of the at least one switch device in the energy storage switch unit 302.

When the first voltage that is input by the input unit 303 is relatively low, in a possible implementation, the input unit includes an input direct current source and a direct current voltage boost circuit.

The direct current voltage boost circuit is configured to perform voltage boosting on the first voltage of the input direct current source.

It should be noted that the application scenario provided in this application may be, but is not limited to, the photovoltaic power generation system described in the foregoing embodiments. In any electric energy application scenario in which conversion between direct current voltages needs to be implemented, such as a high-voltage direct current (HVDC) system or an uninterruptible power supply (UPS) system, the flipped conversion circuit 300 provided in this application may be used to perform voltage conversion. This is not specifically limited herein.

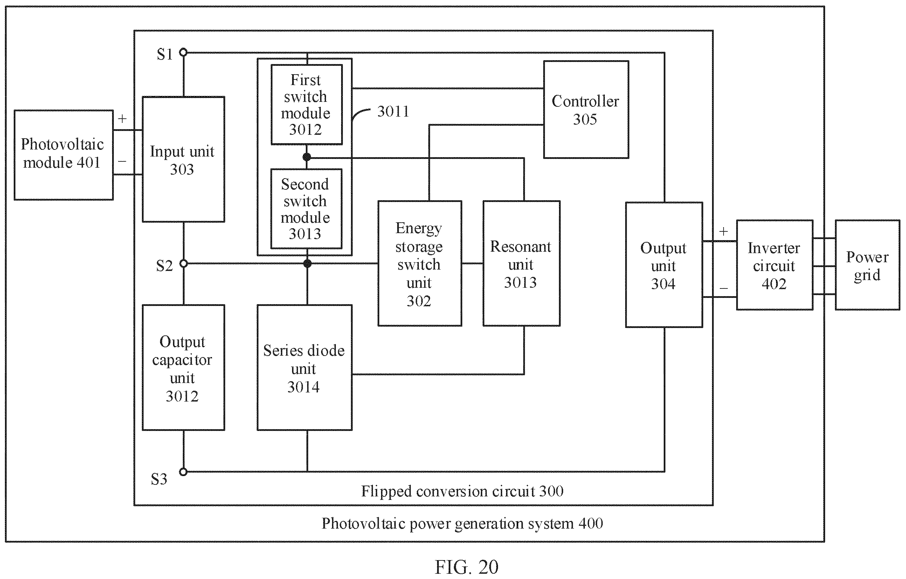

This application further provides a photovoltaic power generation system. As shown in FIG. 20, the photovoltaic power generation system 400 includes the flipped conversion circuit 300 described in the foregoing embodiments, a plurality of photovoltaic strings 401, and an inverter circuit 402. The plurality of photovoltaic strings 401 are connected to an input unit 303 in the flipped conversion circuit 300. An output unit 304 in the flipped conversion circuit 300 is connected to the inverter circuit 402. The flipped conversion circuit 300 is configured to convert, into second voltages, first voltages that are output by the plurality of photovoltaic strings 401, so that the output unit 304 outputs the second voltage. An output terminal of the inverter circuit 402 is connected to a power grid, to convert the second voltage into an alternating current voltage and provide the alternating current voltage to the power grid.

The photovoltaic power generation system 400 provided in this embodiment of this application may be applied to an application scenario of a large photovoltaic power station, an application scenario of a small- and medium-sized distributed power station, and an application scenario of a residential photovoltaic power generation system. The photovoltaic power generation system 400 may convert light energy into a direct current, and then convert the direct current into an alternating current, to provide the alternating current for a load or a power grid. The photovoltaic power generation system may also be referred to as a photovoltaic inversion system or a photovoltaic inverter system.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A flipped conversion circuit, wherein the flipped conversion circuit comprises a first connection end S1, a second connection end S2, a third connection end S3, a half-bridge switch unit, an output capacitor unit, a resonant unit, a series diode unit, an energy storage switch unit, an input unit, an output unit, and a controller, wherein the half-bridge switch unit comprises N switch devices, and N is an even number;
the half-bridge switch unit is connected between S1 and S2, the series diode unit is connected between S2 and S3, the output capacitor unit is connected to two ends of the series diode unit in parallel, the input unit is connected between S1 and S2, and the output unit is connected between S1 and S3;
the energy storage switch unit comprises at least one switch device and a first diode D1, wherein the at least one switch device is connected to the first diode D1 in series;
the resonant unit comprises a first capacitor and a first inductor, wherein a first end of the first inductor is connected to the half-bridge switch unit, a second end of the first capacitor is connected to the series diode unit, and a second end of the first inductor is connected to a first end of the first capacitor;
one end of the energy storage switch unit is connected between the half-bridge switch unit and the series diode unit, and the other end is connected to the second end of the first inductor; and
the controller is configured to convert, by controlling the switch device in the half-bridge switch unit and the switch device in the energy storage switch unit to be turned on or turned off, a first voltage that is input by the input unit into a second voltage, so that the output unit outputs the second voltage.

2. The flipped conversion circuit according to claim 1, wherein the half-bridge switch unit comprises a first switch module and a second switch module, wherein the first switch module and the second switch module each comprise one switch device.

3. The flipped conversion circuit according to claim 1, wherein the half-bridge switch unit comprises a first switch module and a second switch module, wherein the first switch module and the second switch module each comprise a plurality of switch devices; and in the first switch module and the second switch module, every two adjacent switch devices are connected to each other in series and/or in parallel.

4. The flipped conversion circuit according to any one of claims 1 to 3, wherein the series diode unit comprises a second diode D2 and a third diode D3, wherein
a negative electrode of D2 is connected to S2, a positive electrode of D2 is connected to a negative electrode of D3, and a positive electrode of D3 is connected to S3; and the second end of the first inductor in the resonant unit is connected between D2 and D3.

5. The flipped conversion circuit according to claim 4, wherein the controller is specifically configured to:
when a ratio of the first voltage to the second voltage is set to a first target ratio, control the switch device in the second switch module to be turned on, so that the first capacitor and the first inductor that are in the resonant unit form resonance, and the resonant unit reversely charges an output capacitor in the output capacitor unit by using D3 in the series diode unit;
when it is detected that a resonance current on the first inductor in the resonant unit is 0, control the switch device in the second switch module to be turned off;
control the switch device in the first switch module to be turned on and the switch device in the energy storage switch unit to be turned on, wherein the first voltage charges the first inductor;
control the switch device in the first switch module to be turned on, so that the first capacitor and the first inductor that are in the resonant unit form resonance; and
when it is detected that the resonance current on the first inductor in the resonant unit is 0, control the switch device in the first switch module to be turned off.

6. The flipped conversion circuit according to claim 4, wherein the controller is specifically configured to:
when a ratio of the first voltage to the second voltage is set to a second target ratio, control the switch device in the second switch module to be turned on, so that the first capacitor and the first inductor that are in the resonant unit form resonance;
when it is detected that a resonance current on the first inductor in the resonant unit is 0, control the switch device in the second switch module to be turned off;
control the switch device in the first switch module to be turned on, so that the first capacitor and the first inductor that are in the resonant unit form resonance; and
when it is detected that the resonance current on the first inductor in the resonant unit is 0, control the switch device in the first switch module to be turned off.

7. The flipped conversion circuit according to any one of claims 1 to 6, wherein the flipped conversion circuit further comprises a second capacitor and a third capacitor, wherein one end of the second capacitor is connected to S1, the other end of the second capacitor is connected to one end of the third capacitor, and the other end of the third capacitor is connected to S2.

8. The flipped conversion circuit according to any one of claims 1 to 6, wherein the first switch module comprises a first switching transistor Q1, a second switching transistor Q2, and a fourth diode D4; and the second switch module comprises a third switching transistor Q3, a fourth switching transistor Q4, and a fifth diode D5, wherein
a first electrode of Q1 is connected to S1, a second electrode of Q1 is connected to a first electrode of Q2, a second electrode of Q2 is connected to the first end of the first inductor, and a negative electrode of D4 is connected to the second electrode of Q1; and
a first electrode of Q3 is connected to the first end of the first inductor, a second electrode of Q3 is connected to a first electrode of Q4, a second electrode of Q4 is connected to S2, and a positive electrode of D5 is connected to the second electrode of the Q3; and a positive electrode of D4 is connected to a negative electrode of D5.

9. The flipped conversion circuit according to claim 8, wherein the flipped conversion circuit further comprises a fourth capacitor and a fifth capacitor, wherein one end of the fourth capacitor is connected to S1, the other end of the fourth capacitor is connected to one end of the fifth capacitor, the other end of the fifth capacitor is connected to S2, and the other end of the fourth capacitor is further connected to the positive electrode of D4.

10. The flipped conversion circuit according to claim 9, wherein the controller is further configured to:
when the ratio of the first voltage to the second voltage is set to the first target ratio, control Q3 and Q4 that are in the second switch module to be turned on, so that the first capacitor and the first inductor that are in the resonant unit form resonance, and the resonant unit reversely charges the output capacitor in the output capacitor unit by using D3 in the series diode unit;
when it is detected that the resonance current on the first inductor in the resonant unit is 0, control Q3 and Q4 that are in the second switch module to be turned off;
control Q1 and Q2 that are in the first switch module to be turned on and the switch device in the energy storage switch unit to be turned on, wherein the first voltage charges the first inductor;
control Q1 and Q2 that are in the first switch module to be turned on, so that the first capacitor and the first inductor that are in the resonant unit form resonance;
when it is detected that the resonance current on the first inductor in the resonant unit is 0, control Q1 and Q2 that are in the first switch module to be turned off; and
control Q3 in the first switch module to be turned on, so that an inductance current on the first inductor in the resonant unit reversely charges the output capacitor in the output capacitor unit by using Q3, D5, and D3.

11. The flipped conversion circuit according to claim 9, wherein the controller is further configured to:
when the ratio of the first voltage to the second voltage is set to the second target ratio, control Q3 in the second switch module to be turned on, so that an inductance current on the first inductor in the resonant unit reversely charges the output capacitor in the output capacitor unit by using Q3, D5, and D3;
control Q3 and Q4 that are in the first switch module to be turned on, so that the first capacitor and the first inductor that are in the resonant unit form resonance;
when it is detected that the resonance current on the first inductor in the resonant unit is 0, control Q3 and Q4 that are in the second switch module to be turned off;
control Q2 in the second switch module to be turned on, so that the inductance current on the first inductor in the resonant unit reversely charges the output capacitor in the output capacitor unit by using Q2, D4, and D3;
control Q1 and Q2 that are in the first switch module to be turned on, so that the first capacitor and the first inductor that are in the resonant unit form resonance; and
when it is detected that the resonance current on the first inductor in the resonant unit is 0, control Q1 and Q2 that are in the first switch module to be turned off.

12. The flipped conversion circuit according to claim 9, wherein the controller is further configured to:
when a ratio of the first voltage to the second voltage is set to a third target ratio, control Q3 in the second switch module to be turned on;
when the resonance current on the first inductor in the resonant unit is controlled to be 0, control Q3 in the second switch module to be turned off;
control Q1 and Q2 that are in the first switch module to be turned on and the switch device in the energy storage switch unit to be turned on, wherein the first voltage charges the first inductor;
control Q1 and Q2 that are in the first switch module to be turned on and the switch device in the energy storage switch unit to be turned off, so that the first capacitor and the first inductor that are in the resonant unit form resonance; and
control Q3 in the second switch module to be turned on.

13. The flipped conversion circuit according to any one of claims 1 to 12, wherein the energy storage switch unit further comprises a sixth capacitor, wherein the sixth capacitor is connected to the first diode D1 in parallel, and the sixth capacitor is configured to eliminate a voltage peak of the at least one switch device in the energy storage switch unit.

14. The flipped conversion circuit according to any one of claims 1 to 13, wherein the input unit specifically comprises an input direct current source and a direct current voltage boost circuit, wherein
the direct current voltage boost circuit is configured to perform voltage boosting on the first voltage of the input direct current source.

15. A photovoltaic power generation system, comprising at least one flipped conversion circuit according to any one of claims 1 to 14, a plurality of photovoltaic strings, and an inverter circuit, wherein the plurality of photovoltaic strings are connected to an input unit in the flipped conversion circuit; and an output unit in the flipped conversion circuit is connected to the inverter circuit;
the flipped conversion circuit is configured to convert first voltages that are output by the plurality of photovoltaic strings into second voltages, so that the output unit outputs the second voltage; and
an output terminal of the inverter circuit is connected to a power grid, to convert the second voltage into an alternating current voltage and provide the alternating current voltage to the power grid.
